# EUROPÄISCHE PATENTSCHRIFT

(11) **EP 4 367 163 B1**
(45) Veröffentlichungstag und Bekanntmachung des Hinweises auf die Patenterteilung: **23.04.2025**
(21) Anmeldenummer: 22732273.2
(22) Anmeldetag: 27.06.2022
(51) Int. Cl.: C08G 64/14, C08G 64/24, C08G 81/02

(54) **POLYCARBONAT MIT CARBOXY-ENDGRUPPEN UND VERFAHREN ZUR HERSTELLUNG DES POLYCARBONATS**
POLYCARBONATE WITH CARBOXY-TERMINALS AND METHOD FOR PRODUCING POLYCARBONATE
POLYCARBONATE AYANT DES GROUPES TERMINAUX CARBOXY ET PROCÉDÉ DE PRODUCTION DE POLYCARBONATE

(30) Priorität: 05.07.2021 EP 21183770
(43) Veröffentlichungstag der Anmeldung: 15.05.2024
(73) Patentinhaber: Covestro Deutschland AG, 51373 Leverkusen (DE)
(72) Erfinder: SEIDEL, Andreas, 41542 Dormagen (DE); HEIJL, Jan, 9940 Evergem (BE); BERTIN, Annabelle, 2020 Antwerpen (BE)
(74) Vertreter: Levpat
(86) Internationale Anmeldenummer: PCT/EP2022/067472
(87) Internationale Veröffentlichungsnummer: WO 2023/280607

(56) Entgegenhaltungen:
- WO-A1-2016/189494
- US-A- 4 853 458

## Beschreibung

Die vorliegende Erfindung betrifft ein aromatisches Polycarbonat mit Carboxy-Endgruppen, ein Verfahren zur Herstellung eines aromatischen Polycarbonats, die Verwendung des aromatischen Polycarbonats zur Herstellung von Copolymeren, ein Verfahren zur Herstellung der Copolymere sowie eine Formmasse und ein Formkörper enthaltend die Copolymere.

Zur Herstellung von transparenten oder transluzenten (durchleuchtbaren) Formkörpern wird Polycarbonat seit vielen Jahren eingesetzt. Für den Automobilbereich, den Bausektor oder den Elektronikbereich sind in den letzten Jahren Anwendungen mit neuartigen Beleuchtungskonzepten und Funktionsintegration dazugekommen, für die durchleuchtbare Formmassen eingesetzt werden.

Polycarbonat ist aber hinsichtlich wichtiger Eigenschaften wie beispielsweise Kratzfestigkeit, Spannungsrissbeständigkeit unter Chemikalieneinfluss, mechanischen Eigenschafen und Verarbeitungsverhalten (Schmelzefließfähigkeit) für manche Anwendungen nicht ausreichend. Die Entwicklung von Polymerblends von Polycarbonat mit anderen Thermoplasten ist ein häufig verfolgter Ansatz, spezielle technische Anforderungsprofile durch Kombination der spezifischen Eigenschaftsvorteile des Polycarbonats mit denen der polymeren Blendpartner, idealerweise in synergistischer Art und Weise, zu realisieren. Polymerblends aus Polycarbonat (PC) und Polymethylmethacrylat (PMMA) können beispielsweise hinsichtlich Kratzfestigkeit, Spannungsrissbeständigkeit unter Chemikalieneinfluss und Schmelzefließfähigkeit Verbesserungen gegenüber reinem Polycarbonat aufweisen. Gleichzeitig kann die Materialduktilität im Vergleich zu Polymethylmethacrylat erhöht werden.

Die mit Polymerblends erzielbaren vorteilhaften Eigenschaftskombinationen von solchen Polymerblends schließen aber eine Transparenz bzw. Durchleuchtbarkeit von aus ihnen hergestellten Formkörpern oft aus. Polycarbonat und der weitere im Polymerblend enthaltene Thermoplast sind in der Regel nicht vollständig mischbar und bilden daher zweiphasige Morphologien mit einer Matrixphase aus dem einen Polymer und darin verteilten Domänen des anderen Polymers aus. Aufgrund der üblicherweise unterschiedlichen Brechungsindizes der Blendpartner findet an der Vielzahl der Phasengrenzflächen eine Lichtstreuung statt und die Lichttransmission ist insofern insgesamt erheblich gegenüber derer der reinen Blendkomponenten verringert. In der Regel sind solche Blends aus Polycarbonat und mit Polycarbonat nicht mischbaren Polymeren also opak, d.h. nicht oder nur mit einer unzureichenden Lichtausbeute durchleuchtbar.

Weiterhin können die Phasengrenzflächen mechanische Schwachstellen darstellen und insbesondere unter Chemikalieneinfluss zu Materialversagen führen.

Eine in der Literatur beschriebene Möglichkeit, eine verbesserte Kompatibilität von Polycarbonat zu einem mit PC nicht mischbaren thermoplastischen Blendpartner wie beispielsweise PMMA zu erreichen, ist die in-situ Bildung von Blockcopolymeren aus Polycarbonat und dem polymeren Blendpartner, in diesem speziellen Fall also PMMA, in einer Reaktivextrusion. Dabei kann die chemische Reaktion der beiden Polymeren an der Phasengrenzfläche der zweiphasigen Schmelzemischung durch den Einsatz eines Katalysators beschleunigt werden.

WO 2020/212229 A1 offenbart ein Reaktivcompoundierungsverfahren zur Herstellung einer thermoplastischen Formmasse unter Einsatz von aromatischem Polycarbonat, welches keine reaktiven funktionellen Gruppen enthält, und einem weiteren Polymer, welches mindestens eine Art funktioneller Gruppen ausgewählt aus Ester-, Epoxy-, Hydroxy-, Carboxy- und CarbonsäureanhydridGruppen enthält, wobei als Katalysator ein spezielles Phosphoniumsalz eingesetzt wird. Die Anmeldung offenbart insbesondere auch die Herstellung transparenter thermoplastischer PC/PMMA-Formmassen in einem solchen Verfahren.

WO 2016/138246 A1 offenbart transparente PC/PMMA-Blends enthaltend 9,9 bis 40 Gew.-% Polycarbonat und 59,9 bis 90 Gew.-% PMMA, welche aus nicht reaktiv funktionalisierten Polymerkomponenten in einer reaktiven Schmelzextrusion unter Einsatz von 0,0025 bis 0,1 Gew.-% eines Zinn-Katalysators hergestellt werden.

WO 2016/189494 A1 offenbart transparente PC/PMMA-Blends enthaltend 80 bis 95 Gew.-% eines speziell spezifizierten verzweigten Polycarbonats mit einem End-Cap-Gehalt von 45% bis 80% und 4,9 bis 20 Gew.-% PMMA, welche in einer Schmelzextrusion durch Umesterung unter Einsatz von 0,1 bis 1,5 Gew.-% eines Katalysators, bevorzugt ausgewählt aus Zn-, Sn- und Ag-Verbindungen, hergestellt werden.

Formteile aus nach diesen Verfahren hergestellten Blendzusammensetzungen sind zwar hinsichtlich der Lichttransmission gegenüber Formteilen aus durch rein physikalische Mischprozesse hergestellten PC/PMMA-Zusammensetzungen verbessert, weisen aber in der Regel eine für viele Anwendungen noch nicht ausreichende Lichtausbeute bei Durchleuchtung und nicht ausreichende mechanische Eigenschaften, insbesondere eine zu geringe Materialduktilität, auf.

Neben dem beschriebenen Einsatz eines Katalysators kann durch eine geeignete Funktionalisierung des Polycarbonats die in-situ Bildung von Copolymeren ebenfalls begünstigt werden.

US 4,853,458 und US 4,959,411 beschreiben die Herstellung von endständig Carboxyfunktionalisierten Polycarbonaten, wobei ein Carbonsäure- oder Carbonsäurederivat-substituiertes Phenol, vorzugsweise t-Butyl-p-hydroxybenzoat, als Kettenabbrecher in einer Polycarbonat-bildenden Reaktion terminal in das PC eingebaut wird. Auch offenbart wird ein Verfahren zur Herstellung eines Blockcopolymers durch Reaktion in organischer Lösung oder in einer Schmelzecompoundierung eines Epoxy-funktionalisierten Olefin-Polymers mit einem solchen Carboxy- oder Carbonsäurederivatfunktionalisierten Polycarbonat sowie die Verwendung eines solchen Copolymers zur Kompatibilisierung von Polymerblends aus Polycarbonat und Polyolefin mit dem Ziel der Reduktion ihrer Neigung zur Delamination. Zur Eignung derartig funktionalisierter Polycarbonate zur Herstellung transparenter PC/PMMA-Blends geben diese Anmeldungen keine Hinweise.

Für den letztgenannten Ansatz einer Reaktion zwischen einem geeignet funktionalisieren Polycarbonat und dem polymeren Blendpartner ist die genaue Art der Funktionalisierung des Polycarbonats, d.h. die Auswahl und Konzentration geeigneter reaktiver Gruppen, von großer Bedeutung und ebenso ein effizientes Verfahren zu dessen Herstellung. Weiterhin soll die aus dem Polycarbonat und dem Blendpartner hergestellte Formmasse gut für die thermoplastische Verarbeitung zu Formkörpern geeignet sein. Für diese Aspekte bestand im Hinblick auf den Stand der Technik noch Verbesserungsbedarf.

Es war also wünschenswert, ein aromatisches Polycarbonat bereitzustellen, das sich besonders gut eignet für die Herstellung von Blockcopolymeren enthaltend mindestens einen Polycarbonat-Block, welche beispielsweise als Verträglichkeitsvermittler in Polymer-Blends geeignet sind.

Es war insbesondere wünschenswert, ein aromatisches Polycarbonat bereitzustellen, dass sich besonders gut für die Herstellung von thermoplastischen durchleuchtbaren Formmassen und Formkörpern enthaltend Polycarbonat und ein Vinylpolymer, bevorzugt Polymethylmethacrylat, eignet.

Ebenso war es wünschenswert, ein Verfahren bereitzustellen, durch das das funktionalisierte Polycarbonat einfach und mit einem günstigen Verhältnis zu unerwünschten Nebenprodukten hergestellt wird.

Überraschenderweise wurde gefunden, dass ein aromatisches Polycarbonat enthaltend
A) von einer Hydroxybenzoesäure abgeleitete, als Endgruppen vorliegende Struktureinheiten mit freier COOH-Funktionalität und
B) von einer Hydroxybenzoesäure abgeleitete Struktureinheiten,
   wobei Komponente B) ausgewählt ist aus mindestens einem Vertreter aus
   B1) von einer Hydroxybenzoesäure abgeleiteten, als Endgruppen vorliegenden Struktureinheiten mit veresterter COOH-Funktionalität,
      und
   B2) von einer Hydroxybenzoesäure abgeleiteten Struktureinheiten, welche über eine Ester-Gruppe (= B2-a) oder Säureanhydrid-Gruppe (=B2-b) in der Polymer-Kette eingebaut vorliegen,

wobei das molare Verhältnis der Menge von Komponente A zur Menge von Komponente B im Bereich von 1,3 bis 50 liegt,
die angestrebten Eigenschaften aufweist.

In einer bevorzugten Ausführungsform enthält das Polycarbonat weiterhin als Komponente C von Monophenolen (also Aromaten mit nur einer phenolischen OH-Funktionalität), welche keine Carboxy- oder Carboxyderivat-Funktionalitäten enthalten, abgeleitete Struktureinheiten als Endgruppen.

Weiter bevorzugt liegt Komponente C in dem erfindungsgemäßen Polycarbonat in einem molaren Anteil, bezogen auf in Summe 100 mol-% der molaren Anteile der Komponenten A, B1, B2 und C, von 20 bis 90 mol-%, besonders bevorzugt 40 bis 85 mol-%, weiter bevorzugt 45 bis 80 mol-%, besonders bevorzugt 50 bis 75 mol-% vor.

Im Rahmen dieser Anmeldung werden die Begrifflichkeiten "Carboxy" und "Carboxyl" synonym verwendet und stehen für COOH-Gruppen.

Das erfindungsgemäße aromatische Polycarbonat wird im Folgenden als aromatisches Polycarbonat enthaltend (terminale) COOH-Endgruppen bezeichnet.

Ebenso wurde überraschenderweise gefunden, dass ein solches aromatisches Polycarbonat hergestellt werden kann durch ein Verfahren welches die folgenden Schritte umfasst:
(i) Herstellung eines aromatischen Polycarbonats, enthaltend von einem Hydroxybenzoesäureester abgeleitete Endgruppen, durch Phosgenierung im Phasengrenzflächenverfahren oder in organischer Lösung von aromatischen Diolen in Anwesenheit eines Esters einer Hydroxybenzoesäure (bevorzugt p-Hydroxy-Benzoesäure) oder einer Mischung mehrerer Ester einer oder mehrerer strukturell unterschiedlicher Hydroxybenzoesäuren, weiter bevorzugt verestert mit einem Alkohol der allgemeinen Strukturformel (1) 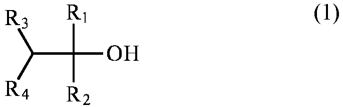
   wobei R₁ und R₂ unabhängig voneinander für Wasserstoff oder einen Alkyl-, Aryl- oder Alkylaryl-Rest mit 1 bis 10 C-Atomen, bevorzugt für Wasserstoff oder einen Alkylrest mit 1 bis 4 C-Atomen, besonders bevorzugt für Wasserstoff oder einen Methyl-Rest, am meisten bevorzugt beide für einen Methylrest stehen und
   R₃ und R₄ unabhängig voneinander für Wasserstoff oder einen Alkyl-, Aryl- oder Alkylaryl-Rest mit 1 bis 10 C-Atomen, bevorzugt für Wasserstoff oder einen Alkylrest mit 1 bis 4 C-Atomen, besonders bevorzugt für Wasserstoff oder einen Methyl-Rest, am meisten bevorzugt beide für Wasserstoff stehen
   als Kettenabbrecher,
   wobei bei der Herstellung gemäß Verfahrensschritt (i) zu keinem Zeitpunkt eine Temperatur von 260°C, bevorzugt zu keinem Zeitpunkt eine Temperatur von 240°C, weiter bevorzugt zu keinem Zeitpunkt eine Temperatur von 230°C, am meisten bevorzugt zu keinem Zeitpunkt eine Temperatur von 200°C überschritten wird,
      und
(ii) thermische Endgruppenpyrolyse der von Hydroxybenzoesäureestern abgeleiteten Endgruppen im Produkt aus Verfahrensschritt (i) unter Eliminierung eines Alkens der allgemeinen Strukturformel R₃R₄C=CR₁R₂,
   wobei R₁, R₂, R₃ und R₄ die oben genannten Bedeutungen haben,
   wobei das Produkt aus Verfahrensschritt (i) im Verfahrensschritt (ii) unter Zuführung thermischer oder mechanischer Energie im Temperaturbereich 230 bis 265°C, bevorzugt 230 bis 260°C, besonders bevorzugt 230 bis 255°C pyrolysiert und das entstehende Alken aus dem Aggregat entfernt wird und
   wobei die Verweilzeit bei der Temperatur im Bereich 230 bis 265°C, bevorzugt 230 bis 260°C, besonders bevorzugt 230 bis 255°C minimal 15 s und maximal 10 Minuten, bevorzugt minimal 20 s und maximal 5 Minuten, besonders bevorzugt minimal 30 s und maximal 2 Minuten beträgt.

Bevorzugt handelt es sich bei dem Alkohol, mit dem die Hydroxybenzoesäure verestert ist, um einen tertiären Alkohol, am meisten bevorzugt um tert.-Butanol.

Es wurde überraschenderweise gefunden, dass bei Nichteinhaltung der zuvor genannten Temperatur- und Verweilzeitbedingungen keine Polycarbonate mit den erfindungsgemäßen Strukturmerkmalen, wie sie für die Lösung des technischen Problems erforderlich sind, resultieren.

In einer bevorzugten Ausführungsform wird der Verfahrensschritt (ii) in einem Compoundierungsaggregat ausgewählt aus der Gruppe umfassend Einwellenextruder, gleichläufige oder gegenläufige Doppelwellenextruder, Planetwalzenextruder, kontinuierlichen oder diskontinuierliche Innenkneter und Filmtruder durchgeführt, wobei das Produkt aus Verfahrensschritt (i) im Verfahrenschritt (ii) in diesen Compoundierungsaggregaten unter Zuführung thermischer oder mechanischer Energie aufgeschmolzen und bei einer Schmelzetemperatur im Temperaturbereich 230 bis 265°C, bevorzugt 230 bis 260°C, besonders bevorzugt 230 bis 255°C pyrolysiert und das entstehende Alken aus dem Aggregat entfernt wird und wobei die Verweilzeit bei der Temperatur im Bereich 230 bis 265°C, bevorzugt 230 bis 260°C, besonders bevorzugt 230 bis 255°C minimal 15 s und maximal 10 Minuten, bevorzugt minimal 20 s und maximal 5 Minuten, besonders bevorzugt minimal 30 s und maximal 2 Minuten beträgt. Das im Verfahrensschritt (i) hergestellte aromatische Polycarbonat wird dabei in dieser bevorzugten Ausführungsform bevorzugt vor dem Einsatz im Verfahrensschritt (ii) nach der
(i-a) Polymerisation durch Phosgenierung im Phasengrenzflächenverfahren oder in organischer Lösung von aromatischen Diolen in Anwesenheit eines Esters einer Hydroxybenzoesäure
(i-b) in einem nachgeschalteten Aufarbeitungsschritt isoliert, das heißt das im Verfahrensschritt (i-a) verwendete Lösungsmittel oder Lösungsmittelgemisch zumindest weitgehend abgetrennt.

Sowohl im Polymerisationsverfahrensschritt (i-a) als auch in dem Aufarbeitungsschritt (i-b) wird dabei zu keinem Zeitpunkt eine Temperatur von 260°C, bevorzugt zu keinem Zeitpunkt eine Temperatur von 240°C, weiter bevorzugt zu keinem Zeitpunkt eine Temperatur von 230°C, am meisten bevorzugt zu keinem Zeitpunkt eine Temperatur von 200°C überschritten.

Bevorzugt erfolgt die Aufarbeitung gemäß Schritt (i-b) durch Sprühtrocknung oder durch Fällung des Polycarbonats in einem geeigneten Lösungsmittel, beispielsweise in Isopropanol, Methanol oder Wasser, mit anschließender Abtrennung der Lösungsmittelphase. Diese Abtrennung kann beispielsweise durch Filtration, Sedimentation mit anschließender Dekantierung, Zentrifugation oder eine Kombination dieser Verfahren, jeweils mit anschließender Trocknung, wobei die Trocknung bevorzugt bei Temperaturen im Bereich 60 bis 120°C, besonders bevorzugt unter Anlegen eines Unterdrucks durchgeführt wird, erfolgt.

Der Verfahrensschritt (ii) kann in einem alternativen, ebenfalls bevorzugten Verfahren auch im Rahmen der Isolation des Polycarbonats aus Verfahrensschritt (i) erfolgen, das heißt beispielsweise im Rahmen der Entfernung von (Rest)Lösungsmittel. In diesem Fall wird das Lösungsmittel beziehungsweise Lösungsmittelgemisch oder nach Teilentfernung des Lösungsmittels beziehungsweise Lösungsmittelgemisches in einem Verfahrensschritt (i-b) restliches Lösungsmittel oder Lösungsmittelgemisch im Verfahrensschritt (ii) unter Zuführung thermischer oder mechanischer Energie im Temperaturbereich 230 bis 265°C, bevorzugt 230 bis 260°C, besonders bevorzugt 230 bis 255°C, optional unter Anlegen eines Unterdrucks, entfernt und dabei gleichzeitig die von einem Hydroxybenzoesäureester abgeleiteten Endgruppen thermisch pyrolysiert und das entstehende Alken ebenfalls aus dem Aggregat entfernt, wobei die Verweilzeit bei der Temperatur im Bereich 230 bis 265°C, bevorzugt 230 bis 260°C, besonders bevorzugt 230 bis 255°C minimal 15 s und maximal 10 Minuten, bevorzugt minimal 20 s und maximal 5 Minuten, besonders bevorzugt minimal 30 s und maximal 2 Minuten beträgt. Für ein solches erfindungsgemäßen Verfahren eignen sich bevorzugt Verfahrensaggregate ausgewählt aus der Gruppe bestehend aus Entgasungsextruder, Strangverdampfer, Filmtruder und Schaumverdampfer.

### Aromatisches Polycarbonat

Das erfindungsgemäße aromatische Polycarbonat enthält
A) von einer Hydroxybenzoesäure abgeleitete, als Endgruppen vorliegende Struktureinheiten mit freier COOH-Funktionalität (auch als COOH- oder dazu synonym als Carboxy- oder Carboxyl-Endgruppen bezeichnet) und
B) von einer Hydroxybenzoesäure abgeleitete Struktureinheiten, wobei Komponente B) ausgewählt ist aus mindestens einem Vertreter aus
   B1) von einer Hydroxybenzoesäure abgeleiteten, als Endgruppen vorliegenden Struktureinheiten mit veresterter COOH-Funktionalität,
      und
   B2) von einer Hydroxybenzoesäure abgeleiteten Struktureinheiten, welche in der Polymer-Kette über eine Ester-Gruppe (= B2-a) oder Säureanhydrid-Gruppe (= B2-b) eingebaut vorliegen,
und ist dadurch gekennzeichnet, dass das molare Verhältnis der Mengen von Komponenten A und B im Bereich 1,3 bis 50, bevorzugt im Bereich 1,5 bis 25, besonders bevorzugt im Bereich 1,8 bis 10, am meisten bevorzugt im Bereich 2,0 bis 5,0 liegt.

Bei der Berechnung des molaren Verhältnisses der Mengen von Komponenten A und B wird als molare Menge von Komponente B die Summe der molaren Mengen von Komponenten B1, B2-a und B2-b verwendet.

Bevorzugt weisen die erfindungsgemäßen Polycarbonate eine Säurezahl von mindestens 0,3 mg Kaliumhydroxid (KOH)/g, weiter bevorzugt mindestens 0,5 mg Kaliumhydroxid (KOH)/g, weiter bevorzugt mindestens 1,0 mg KOH/g, am meisten bevorzugt mindestens 1,5 KOH/g, jeweils bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur, auf.

Bevorzugt weisen die erfindungsgemäßen Polycarbonate eine Säurezahl im Bereich von 0,5 bis 10 mg Kaliumhydroxid (KOH)/g, weiter bevorzugt 1 bis 7 mg KOH/g, besonders bevorzugt 1,3 bis 5,0 mg KOH/g, am meisten bevorzugt 1,5 bis 3,5 mg KOH/g, jeweils bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur, auf.

Das zu untersuchende Polymer wird zur Bestimmung der Säurezahl in einer Konzentration von 10 g/L in 50 ml Dichlormethan bei Raumtemperatur gelöst. Vor der potentiometrischen Titration mit 0,1 N ethanolischer KOH werden der Probenlösung 5 ml Ethanol zugegeben.

In einer bevorzugten Ausführungsform ist das Polycarbonat dadurch gekennzeichnet, dass das molare Verhältnis der Menge von Komponente B2 zur Summe der Mengen von Komponenten A und B2 bei <0,3, bevorzugt bei <0,2 liegt. Dabei wird bei der Berechnung dieses molaren Verhältnisses als molare Menge der Komponente B2 die Summe der molaren Mengen der Komponenten B2-a und B2-b verwendet.

In einer weiteren bevorzugten Ausführungsform ist das Polycarbonat dadurch gekennzeichnet, dass darin das molare Verhältnis der Menge von Komponenten A zur Summe der Mengen von Komponenten A und B1 bei >0,75, bevorzugt bei >0,9 liegt.

Als Hydroxybenzoesäuren kommen sowohl Hydroxybenzoesäuren mit der Carbonsäuregruppe in para, meta- oder ortho-Stellung zur phenolischen OH-Gruppe in Frage. Bevorzugt sind Hydroxybenzoesäuren mit der Carbonsäuregruppe in para-Stellung zur phenolischen OH-Gruppe. Diese können an den freien aromatischen Ringpositionen einfach oder mehrfach mit C₁-C₁₀ Alkyl-, Aryl- oder Alkylaryl-Resten, bevorzugt mit C₁-C₄ Alkylresten, besonders bevorzugt mit Methyl, oder alternativ mit Halogen oder Ethergruppen, beispielsweise und bevorzugt mit Methoxy, substituiert sein.

Besonders bevorzugt handelt es sich bei den von einer Hydroxybenzoesäure abgeleiteten Struktureinheiten um von p-Hydroxybenzoesäure, welche keine weiteren Substituenten enthält, abgeleitete Struktureinheiten.

Bei den von einer Hydroxybenzoesäure abgeleiteten, als Endgruppen vorliegenden Struktureinheiten mit veresterter COOH-Funktionalität gemäß Komponente B1 handelt es sich bevorzugt um Ester einer Hydroxybenzoesäure (bevorzugt p-Hydroxy-Benzoesäure), weiter bevorzugt verestert mit einem Alkohol der oben angegebenen Strukturformel (1).

Bevorzugt handelt es sich bei dem Alkohol um einen tertiären Alkohol, am meisten bevorzugt um tert.-Butanol.

Die Strukturen für die Komponenten A, B1 und B2 sind beispielhaft für die als Hydroxybenzoesäure besonders bevorzugte p-Hydroxybenzoesäure in den Formeln (2), (3), (4a) und (4b) dargestellt, wobei Formel (2) für Komponente A, Formel (3) für Komponente B1 (am Beispiel des besonders bevorzugten tert-Butylesters) und die Formeln (4a) und (4b) für die Komponente B2 stehen. Formel (4a) zeigt dabei die von einer Hydroxybenzoesäure abgeleitete Struktureinheit, welche in der Polymer-Kette über eine Ester-Gruppe (Komponente B2-a) eingebaut vorliegt. Formel (4b) zeigt die von einer Hydroxybenzoesäure abgeleitete Struktureinheit, welche in der Polymer-Kette über eine Säureanhydrid-Gruppe (Komponente B2-b) eingebaut vorliegt.

In den Formeln (2), (3), (4a) und (4b) stehen m und n jeweils für die Anzahl der in den Klammern dargestellten Monomereinheiten.

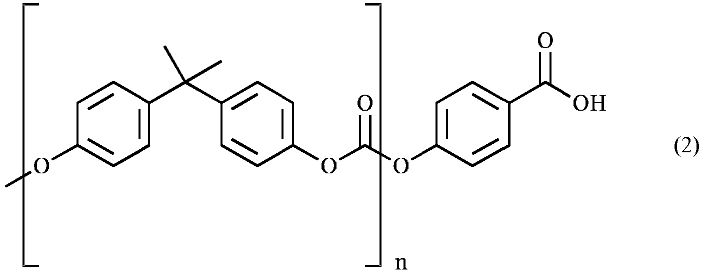

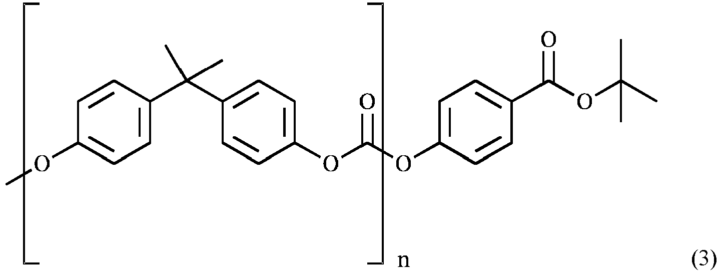

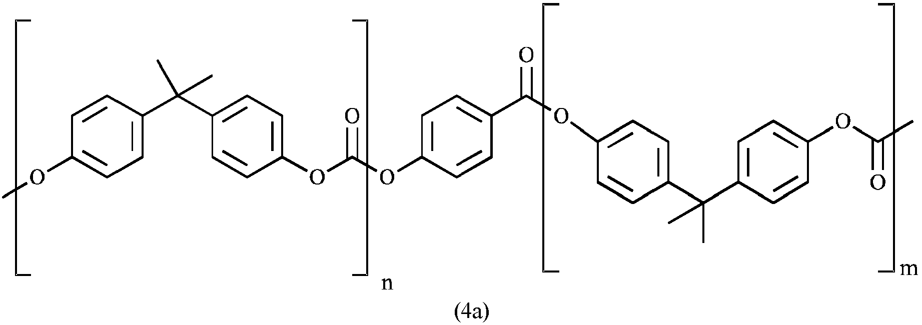

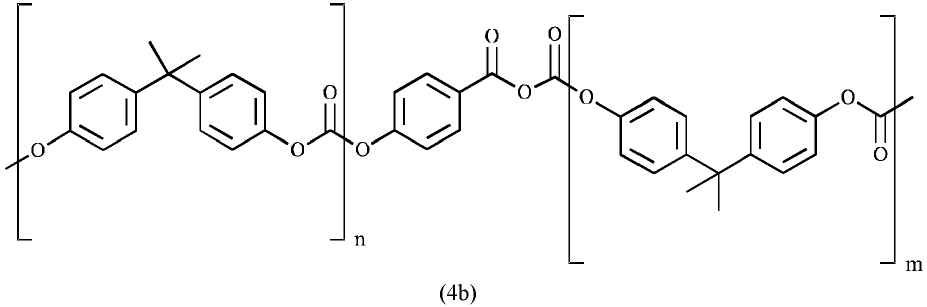

Der molare Anteil der Komponenten A, B1 sowie der beiden möglichen Strukturen für die Komponente B2, sowie die entsprechenden für die Erfindung relevanten molaren Verhältnisse dieser Komponenten werden über ¹H NMR-Spektroskopie bestimmt. Hierfür wird das Polycarbonat in deuteriertem Chloroform bei Raumtemperatur gelöst. Die verschiedenen, von einer Hydroxybenzoesäure abgeleiteten Struktureinheiten lassen sich anhand der NMR-Signale der zur Carboxy-Funktionalität bzw. zur derivatisierten Carboxy-Funktionalität orthoständigen aromatischen Protonen unterscheiden und auf Basis der intergierten Intensitäten dieser Signale die molaren Mengen bzw. Verhältnisse der verschiedenen Strukturen quantifizieren. Dabei handelt es sich im Falle der besonders bevorzugten p-Hydroxybenzoesäure aufgrund der Spin-Spin-Kopplung der ortho-ständigen mit den zur Carboxy-Funktionalität bzw. zur derivatisierten Carboxy-Funktionalität metaständigen aromatischen Protonen in allen Fällen um Dubletts. Für alle Komponenten A, B1 und B2 gehen die entsprechenden NMR-Signale jeweils auf zwei Protonen zurück, so dass sich aus den Verhältnissen der Intensitäten der entsprechenden NMR Signale direkt auf das entsprechende molare Verhältnis der Anteile der verschiedenen Komponenten im Polycarbonat schließen lässt.

Im Spezialfall der besonders bevorzugte p-Hydroxybenzoesäure resonieren
- die Protonen in den von p-Hydroxybenzoesäure abgeleiteten Struktureinheiten gemäß Komponente A im Bereich um 8,14 ppm,
- die Protonen in den von p-Hydroxybenzoesäure abgeleiteten Struktureinheiten gemäß Komponente B1 im Falle des tert-Butyl-Esters gemäß Formel (2) im Bereich um 8,05 ppm,
- die Protonen in den von p-Hydroxybenzoesäure abgeleiteten Struktureinheiten gemäß Komponente B2-b (Formel 4b), welche in der Polymer-Kette über eine Säureanhydrid-Gruppe eingebaut vorliegen, im Bereich um 8,22 ppm und
- die Protonen in den von p-Hydroxybenzoesäure abgeleiteten Struktureinheiten gemäß Komponente B2-a (Formel 4a), welche in der Polymer-Kette über eine Ester-Gruppe eingebaut vorliegen, im Bereich um 8,26 ppm,
wobei alle chemischen Verschiebungen in "parts per million" (ppm) relativ zu Trimethylsilan (TMS) als Referenz angegeben sind.

Insofern zeichnen sich bevorzugte Polycarbonate, bei denen es sich bei den von Hydroxybenzoesäure abgeleiteten Struktureinheiten gemäß Komponenten A, B1 und B2 in allen Fällen um von p-Hydroxybenzoesäure abgeleitete Struktureinheiten und bei den von einer Hydroxybenzoesäure abgeleiteten, als Endgruppen vorliegenden Struktureinheiten mit veresterter COOH-Funktionalität gemäß Komponente B1 um von tert.-Butyl-4-Hydroxybenzoat abgeleitete Struktureinheiten gemäß Formel (2) handelt, dadurch aus, dass in ihrem ¹H NMR-Spektrum, welches in einer Lösung des Polycarbonats in deuteriertem Chloroform bei Raumtemperatur gemessen wurde, das Verhältnis der integrierten Intensität des Dublett-Signals im Bereich um 8,14 ppm zur Summe der integrierten Intensitäten der Dublett-Signale in den Bereichen um 8,05 ppm, 8,22 ppm und 8,26 ppm im Bereich 1,3 bis 50, bevorzugt im Bereich 1,5 bis 25, besonders bevorzugt im Bereich 1,8 bis 10, am meisten bevorzugt im Bereich 2,0 bis 5,0 liegt, wobei die chemischen Verschiebungen jeweils gegen Tetramethylsilan (TMS) referenziert sind.

In einer alternativen Ausführungsform liegt dieses Verhältnis im Bereich 3 bis 50, bevorzugt im Bereich 3 bis 25, am meisten bevorzugt im Bereich 3 bis 10.

Weiterhin zeichnen sich diese bevorzugten Polycarbonate besonders bevorzugt zusätzlich dadurch aus, dass in ihrem ¹H NMR-Spektrum, welches in einer Lösung des Polycarbonats in deuteriertem Chloroform bei Raumtemperatur gemessen wurde, das Verhältnis der Summe der integrierten Intensitäten der Dublett-Signale in den Bereichen um 8,22 ppm und 8,26 ppm zur Summe der integrierten Intensitäten der Dublett-Signale in den Bereichen um 8,14 ppm, 8,22 ppm und 8,26 ppm bei <0,3, bevorzugt bei <0,2 liegt, wobei die chemischen Verschiebungen jeweils gegen Tetramethylsilan (TMS) referenziert sind.

Weiterhin zeichnen sich diese bevorzugten Polycarbonate besonders bevorzugt zusätzlich dadurch aus, dass in ihrem ¹H NMR-Spektrum, welches in einer Lösung des Polycarbonats in deuteriertem Chloroform bei Raumtemperatur gemessen wurde, das Verhältnis der integrierten Intensität des Dublett-Signals im Bereich um 8,14 ppm zur Summe der integrierten Intensitäten der Dublett-Signale in den Bereichen um 8,14 ppm und 8,05 ppm bei >0,75, bevorzugt bei >0,9 liegt, wobei die chemischen Verschiebungen jeweils gegen Tetramethylsilan (TMS) referenziert sind.

In einer bevorzugten Ausführungsform enthält das Polycarbonat weiterhin als Komponente C von Monophenolen (also Aromaten mit nur einer phenolischen OH-Funktionalität), welche keine Carboxy- oder Carboxyderivat-Funktionalitäten enthalten, abgeleitete Struktureinheiten als Endgruppen. Bevorzugt handelt es sich bei den Monophenolen, von denenKomponente C abgeleitet ist, um Phenol oder Alkyl-, Aryl-, Alkylaryl- und/oder Halogen-substituierte Phenole, besonders bevorzugt um Phenol oder C₁- bis C₁₂-Alkylphenole, weiter bevorzugt um Phenol oder p-tert.-Butylphenol, am meisten bevorzugt um p-tert.-Butylphenol.

Eingesetzt werden können weiterhin beispielsweise p-Chlorphenol, 2,4,6-Tribromphenol, 4-(2,4,4-Trimethylpentyl)phenol, 4-(1,1,3,3-Tetramethylbutyl)phenol 3,5-Di-tert.-Butylphenol, p-iso-Octylphenol, p-tert.-Octylphenol, p-Dodecylphenol und 4-(3,6-Dimethyl-3-heptyl)-phenol.

Bei der Herstellung des erfindungsgemäßen Polycarbonats werden die hier erwähnten Monophenole, welche keine Carboxy- oder Carboxyderivat-Funktionalitäten enthalten, in einer bevorzugten Ausführungsform als weitere Kettenabbrecher eingesetzt.

Es können auch Mischungen mehrerer monophenolischer Kettenabbrecher, die keine Carboxy- oder Carboxyderivat-Funktionalitäten enthalten, eingesetzt werden.

Weiter bevorzugt liegt Komponente C in dem erfindungsgemäßen Polycarbonat in einem molaren Anteil, bezogen auf in Summe 100 mol-% der molaren Anteile der Komponenten A, B1, B2, das heißt der Summe der molaren Anteile von B2-a und B2-b, und C, von 20 bis 90 mol-%, besonders bevorzugt 40 bis 85 mol-%, weiter bevorzugt 45 bis 80 mol-%, besonders bevorzugt 50 bis 75 mol-% vor. Mit diesen Anteilen kann einerseits eine ausreichende Copolymerbildung aus Polycarbonat und dem Blendpartner erreicht werden, andererseits werden unerwünschte Vernetzungsreaktionen vermieden, wie unten nochmals ausgeführt wird.

Auch die Menge an Komponente C in dem Polycarbonat sowie dessen molarer Anteil, bezogen auf in Summe 100 mol-% der molaren Anteile der Komponenten A, B1, B2 und C können ¹H NMRspektroskopisch quantifiziert werden. Im besonders bevorzugten Fall, in dem Komponente C von p-tert.-Butylphenol abgeleitete Struktureinheiten sind, eignet sich dafür beispielsweise insbesondere das NMR-Signal der drei Methylgruppen im tert.-Butyl-Rest in den von p-tert.-Butylphenol abgeleiteten Struktureinheiten. Es handelt sich hierbei um ein Singulett bei einer chemischen Verschiebung im Bereich um 1,32 ppm, referenziert gegen Trimethylsilan, welches neun Protonen zugeordnet ist.

Die erfindungsgemäßen Polycarbonate können

als Komponente A auch mehrere, von strukturell unterschiedlichen Hydroxybenzoesäuren abgeleitete, als Endgruppen vorliegende Struktureinheiten mit freier COOH-Funktionalität,
als Komponente B1 auch mehrere unterschiedliche, als Endgruppen vorliegende Struktureinheiten mit veresterter COOH-Funktionalität, welche sich sowohl in der strukturellen Natur der Hydroxybenzoesäure als auch in der strukturellen Natur des zur Ausbildung des Esters eingesetzten tertiären Alkohols unterscheiden können,
als Komponente B2 auch mehrere, von strukturell unterschiedlichen Hydroxybenzoesäuren abgeleitete Struktureinheiten, welche in der Polymer-Kette über eine Ester- oder Säureanhydrid-Gruppe eingebaut vorliegen
   und/oder
als Komponente C mehrere, von strukturell unterschiedlichen Hydroxybenzoesäuren, welche keine Carboxy- oder Carboxyderivat-Funktionalitäten enthalten, abgeleitete Struktureinheiten als Endgruppen enthalten.

In diesem Fall gilt für alle in dieser Anmeldung genannten Mengenverhältnis-Bereiche dieser Struktureinheiten, dass dort als molare Mengen der Komponenten A, B1, B2 und C jeweils die Summen aller molaren Mengen der strukturell unterschiedlichen Komponenten A, B1, B2 und C zur Berechnung der entsprechenden Verhältnisse herangezogen werden.

Das Polycarbonat weist bevorzugt ein gewichtsgemitteltes Molekulargewicht M_{w}, gemessen durch GPC (Gelpermeationschromatographie) bei Raumtemperatur in Methlylenchlorid mit BPA-Polycarbonat-Standard), von 5.000 bis 40.000 g/mol, weiter bevorzugt von 7.000 bis 35.000 g/mol, besonders bevorzugt von 10.000 bis 30.000 g/mol auf.

Für die Verwendung des erfindungsgemäßen Polycarbonats als Formmasse zur Herstellung von Formteilen oder als Bestandteil einer Formmasse zur Herstellung von Formteilen weist das erfindungsgemäße Polycarbonat bevorzugt ein gewichtsgemitteltes Molekulargewicht M_{w}, gemessen durch GPC (Gelpermeationschromatographie) bei Raumtemperatur in Methlylenchlorid mit BPA-Polycarbonat-Standard), von 18.000 bis 40.000 g/mol, weiter bevorzugt von 20.000 bis 35.000 g/mol, besonders bevorzugt von 24.000 bis 32.000 g/mol auf.

Für die Verwendung des erfindungsgemäßen Polycarbonats zu Herstellung von Blockcopolymeren enthaltend Blöcke aus aromatischem Polycarbonat und Blöcke aus einem mit solchen aromatischen Polycarbonaten nicht mischbaren Polymeren kann es im Hinblick auf die Wirksamkeit dieser Blockcopolymere als Verträglichkeitsvermittler in thermoplastischen Polymerzusammensetzungen enthaltend aromatisches Polycarbonat und solche mit aromatischem Polycarbonat nicht mischbaren Polymeren vorteilhaft und bevorzugt sein, ein erfindungsgemäßes Polycarbonat mit einem gewichtsgemitteltem Molekulargewicht M_{w}, gemessen durch GPC (Gelpermeationschromatographie) bei Raumtemperatur in Methlylenchlorid mit BPA-Polycarbonat-Standard), von 5.000 bis 25.000 g/mol, weiter bevorzugt von 7.000 bis 20.000 g/mol, besonders bevorzugt von 8.000 bis 18.000 g/mol am stärksten bevorzugt von 10.000 bis 15.000 g/mol einzusetzen.

Kommt eine Mischung mehrerer Polycarbonate mit unterschiedlicher individueller Säurezahl, unterschiedlichem Verhältnis von A/B, unterschiedlichem Verhältnis von B2/(A+B2), unterschiedlichem Verhältnis von A/(A+B1) und/oder unterschiedlichem individuellen gewichtsgemittelten Molekulargewicht M_{w} zum Einsatz, so gilt, dass diese Mischung eine Säurezahl, ein Verhältnis von A/B, ein Verhältnis von B2/(A+B2), ein Verhältnis von A/(A+B1) bzw. ein gewichtsgemitteltes Molekulargewicht M_{w} in einem der oben genannten Bereiche aufweist.

Die Herstellung aromatischer Polycarbonate im Allgemeinen ist literaturbekannt (zur Herstellung aromatischer Polycarbonate siehe beispielsweise Schnell, "Chemistry and Physics of Polycarbonates", Interscience Publishers, 1964).

Die Herstellung der erfindungsgemäßen aromatischen Polycarbonate enthaltend terminale COOH-Gruppen erfolgt in ähnlicher Weise wie in US 4,853,458 B durch Umsetzung von Diphenolen (aromatischen Diolen) mit Phosgen, nach dem Phasengrenzflächenverfahren unter Verwendung eines wie oben beschriebenen Esters einer Hydroxybenzoesäure oder einer Mischung mehrerer Ester einer oder einer Mischung mehrerer, strukturell unterschiedlicher Hydroxybenzoesäuren, wobei sich bei Einsatz einer solchen Mischung die eingesetzten Ester sowohl in der Natur der Hydroxybenzoesäure als auch in der Natur des zur Ausbildung des Esters eingesetzten Alkohols unterscheiden können, als monophenolischen Kettenabbrecher und anschließender Freisetzung der terminalen COOH Gruppen (COOH-Funktionalität).

In einer bevorzugten Ausführungsform werden zusätzlich zu dem Ester einer Hydroxybenzoesäure die oben beschriebenen weiteren Monophenole, die keine Carboxy- oder Carboxyderivat-Funktionalitäten enthalten, als Kettenabbrecher eingesetzt,.

Werden solche weiteren monophenolischen Kettenabbrecher, die keine Carboxy- oder Carboxyderivat-Funktionalitäten enthalten, eingesetzt, so enthält das so hergestellte aromatische Polycarbonat neben den Komponenten A, B1 und B2 also weiterhin als Komponente C von den monophenolischen Kettenabbrechern abgeleitete Struktureinheiten, am meisten bevorzugt abgeleitet von p-tert.-Butylphenol.

Bei der Herstellung der erfindungsgemäßen Polycarbonate werden die monophenolischen Kettenabbrecher, die keine Carboxy- oder Carboxyderivat-Funktionalitäten enthalten, in der Kettenabbrecher-Mischung, bestehend aus diesen monophenolischen Kettenabbrechern, die keine Carboxy- oder Carboxyderivat-Funktionalitäten enthalten, und den als Kettenabbrecher eingesetzten Estern einer Hydroxybenzoesäure, bevorzugt in einem Anteil von 20 bis 90 mol-%, besonders bevorzugt 40 bis 85 mol-%, weiter bevorzugt 45 bis 80 mol-%, am meisten bevorzugt 50 bis 75 mol-% eingesetzt. Die sich ergebende jeweilige Differenz zu 100 mol-% entspricht dann dem Anteil der Ester von einer oder mehreren Hydroxybenzoesäuren. Dieser liegt also bei bevorzugt 10 bis 80 mol-%, besonders bevorzugt 15 bis 60 mol-%, weiter bevorzugt 20 bis 55 mol-%, am meisten bevorzugt 25 bis 50 mol-%.

Ist der Gehalt an in der Kettenabbrecher-Mischung eingesetzten Estern einer Hydroxybenzoesäure größer als die angegebenen bevorzugten Bereiche, so kann es beim Einsatz der Polycarbonate zu unerwünschten Vernetzungsreaktionen bei der Reaktivcompoundierung mit dem Blendpartner kommen, so dass die thermoplastische Verarbeitbarkeit der Reaktivmischung nicht mehr gegeben ist. Ist der Gehalt an in der Kettenabbrecher-Mischung eingesetzten Estern einer Hydroxybenzoesäure kleiner als die angegebenen bevorzugten Bereiche, so kann die gewünschte Copolymerbildung zwischen dem Polycarbonat und dem Blendpartner nicht mehr in einem zur Erzielung des angestrebten technischen Effektes ausreichendem Maße stattfinden.

Das Molekulargewicht der so hergestellten Polycarbonate kann in für den Fachmann bekannter Art und Weise durch Variation des Verhältnisses der monophenolischen Kettenabbrecher zu Diphenolen in weiten Bereichen zielgenau eingestellt werden.

Durch das Einsatzmengen-Verhältnis in der Kettenabbrecher-Mischung der Hydroxybenzoesäurester zu den optional eingesetzten monophenolischen Kettenabbrechern, die keine Carboxy- oder Carboxyderivat-Funktionalitäten enthalten, sowie durch die Bedingungen bei der anschließenden Freisetzung der COOH Gruppen lässt sich der Gehalt an COOH-Gruppen im aromatischen Polycarbonat über breite Bereiche zielgesteuert einstellen.

Aus den Polycarbonaten mit Hydroxybenzoesäureester-Endgruppen können die terminalen COOH-Gruppen (d.h. Hydroxybenzoesäure-Endgruppen) beispielsweise durch thermische Endgruppenpyrolyse oder durch saure Esterspaltung freigesetzt werden.

Bevorzugtes Verfahren zur Freisetzung der terminalen COOH-Gruppen ist die thermische Endgruppenpyrolyse. Dabei werden bevorzugt Temperaturen von 230 bis 265°C, besonders bevorzugt 230 bis 260°C, am meisten bevorzugt 230 bis 255°C eingesetzt. Die Verweilzeiten bei diesen Temperaturen betragen minimal 15 s und maximal 10 Minuten, bevorzugt minimal 20 s und maximal 5 Minuten, besonders bevorzugt minimal 30 s und maximal 2 Minuten. Unter diesen thermischen Bedingungen wird das Polycarbonat-Rückgrat nicht maßgeblich degeneriert und unerwünschte Nebenreaktionen minimiert. Durch die Variation insbesondere der Temperatur, aber auch der Verweilzeit bei dieser Temperatur, lässt sich der Anteil aus den aus Komponente B1 freigesetzten COOH-Endgruppen gemäß Komponente A und auch das Verhältnis zu unerwünschten Neben- bzw. Folgeprodukten gemäß Komponente B2 steuern. Komponente C bleibt bei der thermischen Endgruppenpyrolyse im Allgemeinen unbeeinflusst.

Diphenole zur Herstellung der aromatischen Polycarbonate und/oder aromatischen Polyestercarbonate sind vorzugsweise solche der Formel (5) 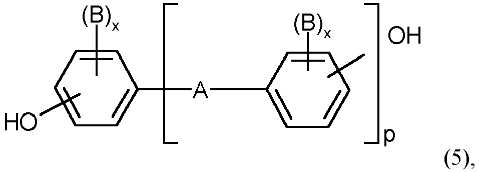 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (6) oder (7) 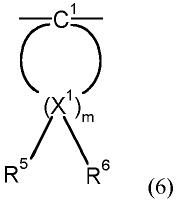 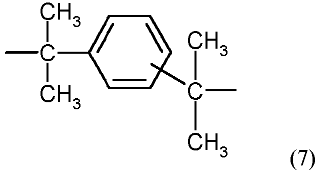
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

In bevorzugter Ausführungsform beträgt der Anteil von Bisphenol-A, bezogen auf die Summe aller zur Herstellung verwendeten Diphenole, mindestens 50 mol-%, besonders bevorzugt mindestens 75 mol-%, am meisten bevorzugt mindestens 95 mol-%. Am stärksten bevorzugt wird bei der Herstellung der Komponente A ausschließlich Bisphenol-A als Diphenol eingesetzt.

Die aromatischen Polycarbonate können in bekannter Weise verzweigt sein, und zwar vorzugsweise durch den Einbau von 0,01 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Bevorzugt handelt es sich bei dem Polycarbonat enthaltend COOH-Endgruppen um ein lineares aromatisches Polycarbonat, weiter bevorzugt um ein lineares aromatische Polycarbonat auf Basis von Bisphenol-A, besonders bevorzugt ausschließlich auf Basis von Bisphenol-A.

### Weiteres Polymer zur Herstellung eines Copolymers

Das aromatische Polycarbonat enthaltend COOH-Endgruppen kann verwendet werden zur Herstellung eines Copolymers. Bevorzugt handelt es sich dabei um ein Blockcopolymer, weiter bevorzugt um ein Blockcopolymer mit einem Vinyl(co)polymer oder Polyolefin.

Geeignete Polymere, mit denen das aromatische Polycarbonat ein Copolymer bilden kann, weisen mindestens eine Art funktioneller Gruppen ausgewählt aus Ester-, Hydroxy-, Carboxy-, Carbonsäureanhydrid- und Epoxygruppen auf. Bevorzugt sind Polymere, die Ester-, Hydroxy- oder Epoxy-Gruppen enthalten. Besonders bevorzugt enthalten die Polymere Epoxy-Gruppen.

Im Falle einer Estergruppe als solche funktionelle Gruppe kann diese bei den Polymeren sowohl Bestandteil der Polymerkette (Polymerrückgrats), wie in einem Polyester der Fall, als auch eine nicht am Aufbau der Polymerkette direkt beteiligte funktionelle Gruppe eines Monomers, wie bei einem Acrylatpolymer der Fall, sein.

Es können auch Mischungen verschiedener solcher Polymere eingesetzt werden. Dabei können die Mischungen jeweils Polymere mit gleichartigen funktionellen Gruppen oder Polymere mit unterschiedlichen funktionellen Gruppen umfassen.

Im Rahmen der vorliegenden Erfindung werden Polymere enthaltend Carbonat-Gruppen, also Ester der Kohlensäure, sofern sie keine aromatischen Struktureinheiten enthalten, ebenfalls als weitere Polymere, die mit dem aromatischen Polycarbonat Blockcopolymere bilden können, angesehen.

Bevorzugt ist das weitere Polymer ausgewählt aus zuvor genannte funktionelle Gruppen enthaltenden Vinyl(co)polymeren, zuvor genannte funktionelle Gruppen enthaltenden Polyolefinen sowie Polyestern.

Bei den erfindungsgemäßen funktionelle Gruppen enthaltenden Vinyl(co)polymeren handelt es sich bevorzugt um (Co)Polymerisate von mindestens einem Monomeren aus der Gruppe der (Meth)-Acrylsäure-(C₁ bis C₈)-Alkylester (wie beispielsweise Methylmethacrylat, n-Butylacrylat, tert.-Butylacrylat), ungesättigte Carbonsäuren und Carbonsäureanhydride, Vinylaromaten (wie beispielsweise Styrol, α-Methylstyrol), Vinylcyaniden (ungesättigte Nitrile wie beispielsweise Acrylnitril und Methacrylnitril) und Olefinen (wie Ethylen)sowie weiteren Vinylmonomeren enthaltend Ester-, Hydroxy-, Carboxy-, Carbonsäureanhydrid- und Epoxygruppen.

Epoxygruppen werden beispielsweise und bevorzugt eingebracht, indem als weiteres Monomer Glycidylmethacrylat zusammen mit dem anderen Monomer oder den anderen Monomeren copolymerisiert wird.

Diese (Co)Polymere sind harzartig und kautschukfrei. Derartige (Co)Polymere sind bekannt und lassen sich durch radikalische Polymerisation, insbesondere durch Emulsions-, Suspensions-, Lösungs- oder Massepolymerisation herstellen.

Besonders geeignete Vinylpolymere enthalten Struktureinheiten abgeleitet von Glycidylmethacrylat.

Ein besonders geeignetes Vinylpolymer ist ein Copolymer aus Methylmethacrylat und Glycidylmethacrylat.

Weiterhin besonders geeignete Vinylpolymere sind Styrol-Acrylnitril-Glycidylmethacrylat-Terpolymere sowie Styrol-Methylmethacrylat-Glycidylmethacrylat-Terpolymere.

In Frage kommende Polyester können aliphatische oder aromatische Polyester sein.

In bevorzugter Ausführungsform sind die Polyester aromatisch, weiter bevorzugt handelt es sich um Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan.

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und/oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1: 1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Auch bevorzugt handelt es sich bei den weiteren Polymeren um funktionelle Gruppen enthaltende Polyolefine, bevorzugt Epoxy-Gruppen enthaltende Polyolefine, besonders bevorzugt Polyolefine enthaltend von Glycidylmethacrylat abgeleitete Struktureinheiten.

Polyolefine werden durch Kettenpolymerisation, beispielsweise durch radikalische oder anionische Polymerisation, hergestellt. Als Monomere werden Alkene eingesetzt. Eine alternative Bezeichnung für Alkene ist Olefine. Die Monomere können einzeln oder als Mischung verschiedener Monomere polymerisiert werden. Bevorzugte Monomere sind Ethylen, Propylen, 1-Buten, Isobuten, 1-Penten, 1-Hepten, 1-Okten und 4-Methyl-1-Penten.

Die Polyolefine können teilkristallin oder amorph sowie linear oder verzweigt sein. Die Herstellung von Polyolefinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Monomerzusammensetzung, der Art der als Monomer eingesetzten Isomere, der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Funktionelle Gruppen werden beispielsweise in die Polyolefine eingebracht, indem wie oben beschrieben Vinylmonomere enthaltend die funktionelle Gruppe mit dem Olefin copolymerisiert werden, bevorzugt durch radikalische Polymerisation. Geeignete Vinylmonomere sind beispielsweise Glycidylmethacrylat und Methylmethcrylat.

Eine alternative Herstellungsmöglichkeit ist ausgehend von einem Polyolefin die radikalische Pfropfung von funktionelle Gruppen enthaltenden Vinylmonomeren.

Bei beiden Herstellungsverfahren können neben den funktionelle Gruppen enthaltenden Vinylmonomeren auch zusätzlich weitere Vinylmonomere ohne funktionelle Gruppen, wie etwa Styrol eingesetzt werden.

Die weiteren Polymere haben mittlere Molekulargewichte (Gewichtsmittel M_{w}, gemessen durch GPC(Gelpermeationschromatographie) gegen Polystyrol als Standard) von bevorzugt 3.000 bis 300.000 g/mol, weiter bevorzugt von 5.000 bis 200.000 g/mol, besonders bevorzugt von 10.000 bis 100.000 g/mol.

Das Lösungsmittel für die GPC Messung wird so ausgewählt, dass es das weitere Polymer, bevorzugt bei Raumtemperatur, gut löst. Ist eine Löslichkeit in dem ausgewählten Lösungsmittel bei Raumtemperatur gegeben, so wird die GPC bei Raumtemperatur durchgeführt.

Ein geeignetes Lösungsmittel für Vinyl(co)polymere wie beispielsweise Copolymere aus Methylmethacrylat und Glycidylmethacrylat, Styrol-Acrylnitril-Glycidylmethacrylat-Terpolymere sowie Styrol-Methylmethacrylat-Glycidylmethacrylat-Terpolymere ist beispielsweise Tetrahydrofuran. Ein geeignetes Lösungsmittel für von Glycidylmethacrylat abgeleitete Struktureinheiten enthaltenden Polyolefine ist beispielsweise ortho-Dichlorbenzol oder 1,2-Dichlorethan. Eine ausreichende Löslichkeit erfordert hier oft eine erhöhte Temperatur beispielsweise 40°C, 60°C, 80°C, 100°C oder 120°C. In diesem Fall wird die GPC bei der Temperatur durchgeführt, die zur Erzielung einer für die GPC ausreichenden Löslichkeit erforderlich ist. Erfordert das Polyolefin zur Erzielung einer für die GPC ausreichenden Löslichkeit eine Temperatur oberhalb von 40°C, so kommt bevorzugt ortho-Dichlorbenzol als Lösungsmittel zum Einsatz.

### Herstellung von Copolymeren aus den erfindungsgemäßen Polycarbonaten

Aus den erfindungsgemäßen aromatischen Polycarbonaten enthaltend COOH-Endgruppen und den zuvor beschriebenen weiteren Polymeren können Copolymere enthaltend mindestens einen Polycarbonat-Block hergestellt werden, bevorzugt Blockcopolymere mit Vinyl(co)polymeren oder Polyolefinen, am meisten bevorzugt Blockcopolymere mit PMMA. Solche Copolymere sind ein weiterer Gegenstand der vorliegenden Erfindung.

Die Herstellung solcher Blockcopolmere erfolgt bevorzugt mit einem Verfahren umfassend die Schritte:
a) Aufschmelzen einer Zusammensetzung enthaltend
   I) ein erfindungsgemäßes aromatisches Polycarbonat enthaltend COOH-Endgruppen und
   II) ein weiteres, funktionelle Gruppen enthaltendes Polymer gemäß der Beschreibung im Kapitel zuvor
   durch Einbringen thermischer Energie und/oder mechanischer Scherung,
b) Vermischen und Dispergieren der verschiedenen Komponenten der Zusammensetzung mit- bzw. ineinander,
c) Verfestigen der Schmelze durch Abkühlen,
d) Granulieren des aus den Schritten a) bis c) resultierenden Materials,
wobei der Schritt (b) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und bei einer Temperatur der Schmelze von bevorzugt 230 bis 300°C erfolgt.

### Weitere Komponenten zur Herstellung einer thermoplastischen Formmasse

Sowohl die erfindungsgemäßen aromatischen Polycarbonate enthaltend COOH-Endgruppen selbst als auch daraus hergestellte Blockcopolymere können als Bestandteil einer thermoplastischen Formmasse, bevorzugt enthaltend ein oder mehrere weitere Polymere, eingesetzt werden. Insbesondere eignen sich die Blockcopolymere zum Einsatz in thermoplastischen Formmassen enthaltend Polycarbonat, bevorzugt aromatisches Polycarbonat. Weiter bevorzugt eignen sich dieses Blockcopolymere zum Einsatz in thermoplastischen Polymerblend-Formmassen enthaltend aromatisches Polycarbonat und mindestens ein weiteres Polymer mit ähnlicher Polarität zu dem Polymerblock, welcher in dem Blockcopolymer mit dem aromatischen Polycarbonat-Block verknüpft ist. Am stärksten bevorzugt eignen sich dieses Blockcopolymere zum Einsatz in thermoplastischen Polymerblends enthaltend aromatisches Polycarbonat und als weiteres Polymer dasselbe Polymer, welches als Polymerblock in dem Blockcopolymer mit dem aromatischen Polycarbonat verknüpft ist.

Diese Formmassen können weitere Komponenten wir Polymeradditive, Prozesshilfsstoffe und/oder weitere polymere Komponenten enthalten, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Schlagzähigkeitsmodifikatoren (sowohl mit als auch ohne Kern-Schale-Struktur), polymeren Blendpartnern, Füll- und Verstärkungsstoffen sowie Farbstoffen und Pigmenten.

Bevorzugte polymere Blendpartner sind aromatisches Polycarbonat enthaltend keine COOH-Endgruppen, Polyester (beispielsweise und bevorzugt Polyethylenterephthalat und Polybutylenterephthalat), Vinyl(co)polymere und Polyolefine. Diese müssen im Gegensatz zu den für die Herstellung von Copolymeren eingesetzten Polymeren keine funktionellen Gruppen enthalten. Das heißt, sie können auch frei sein von funktionellen Gruppen ausgewählt aus Ester-, Hydroxy-, Carboxy-, Carbonsäureanhydrid- und Epoxygruppen. Somit kommen beispielsweise auch Polystyrol, Polyolefine, Copolymere aus Ethylen und/oder Propylen und Acrylaten, Styrol-Acrylnitril-Copolymer, Styrol-Methylmethacrylat-Copolymer und Polymethylmethacrylat als bevorzugte polymere Blendpartner in Frage. Diese können sowohl kautschukfrei als auch kautschukhaltig sein.

Letzteres gilt beispielsweise für Acrylnitril-Butadien-Styrol (ABS) oder Acrylnitril-Butylacrylat-Styrol (ASA)-Polymere.

Die oben genannten weiteren Komponenten werden in einem Anteil von in Summe 0 bis 40 Gew.-%, bevorzugt 0,1 bis 30 Gew.-%, weiter bevorzugt 0,1 bis 10 Gew.-%, bezogen auf die thermoplastische Zusammensetzung eingesetzt.

Zur Erzielung transparenter thermoplastischer Zusammensetzungen ist es in der Regel zweckmäßig bzw. technisch erforderlich, auf bestimmte weitere Komponenten wie beispielsweise Füll- und Verstärkungsstoffe, Schlagzähmodifikatoren und kautschukhaltige Blendpartner zu verzichten oder deren Konzentration sowie die Konzentration der sonstigen eingesetzten weiteren Komponenten auf deutlich niedrigere Gehalte als zuvor angegeben zu begrenzen.

### Herstellung von Formmassen enthaltend die erfindungsgemäßen Polycarbonate und/oder Copolymere sowie Herstellung aus solchen Formmassen hergestellter Formkörper

Die erfindungsgemäßen thermoplastischen Formmassen können beispielsweise hergestellt werden, indem man die jeweiligen Bestandteile, also das erfindungsgemäße Polycarbonat und/oder das erfindungsgemäße Copolymer und weitere polymere Komponenten, Polymeradditive und/oder Prozesshilfsstoffe (also die Zusammensetzung) bei Temperaturen von 220°C bis 320°C, bevorzugt 230 bis 300°C, besonders bevorzugt 240 bis 280°C, am meisten bevorzugt 250 bis 270°C miteinander in der Schmelze vermischt.

Das Vermischen kann in üblichen Aggregaten geschehen, wie beispielsweise in Einwellenextrudern, gleichläufigen oder gegenläufige Doppelwellenextrudern, Planetwalzenextrudern, Innenknetern oder kontinuierlichen oder diskontinuierlichen Co-Knetern. Darin werden die Zusammensetzungen zu Formmassen schmelzcompoundiert oder schmelzextrudiert. Dieser Prozess wird im Rahmen dieser Anmeldung allgemein als Compoundieren oder Schmelzcompoundieren bezeichnet. Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile vollständig oder teilweise über den Haupteinzug eines Extruders dosiert und die restlichen Bestandteile vollständig oder teilweise über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in den Förderextruder einer Spritzgussmaschine zu dosieren, die erfindungsgemäße Formmasse dabei in dem Förderextruder herzustellen und durch entsprechenden Austrag der Formmasse in eine Spritzgussform direkt zu Formkörper zu verarbeiten (Compoundierungs- oder Reaktivcompoundierungsspritzguss).

Ein weiterer Gegenstand der vorliegenden Erfindung betrifft die Verwendung einer erfindungsgemäßen Zusammensetzung oder einer erfindungsgemäßen Formmasse zur Herstellung von Formkörpern, sowie ferner auch einen Formkörper, der aus einer erfindungsgemäßen Zusammensetzung oder aus einer erfindungsgemäßen Formmasse erhältlich ist oder eine solche Formmasse enthält.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Herstellung der Polycarbonat-Vorstufe (PC-1)

In einem kontinuierlich betriebenen Laborreaktor wurde Bisphenol A im Grenzflächenverfahren in einem Gemisch aus Methylenchlorid und Chlorbenzol als Lösemittel in Anwesenheit einer Kettenabbrechermischung bestehend aus p-tert.-Butylphenol und tert.-Butyl-4-Hydroxybenzoat mit Phosgen zur Polykondensationsreaktion gebracht.

Im Rahmen dieser Synthese wurden 72,2 g/h gasförmiges Phosgen in 959 g/h organischem Lösemittelgemisch aus 50 Gew.-% Methylenchlorid und 50 Gew.-% Chlorbenzol bei -7 °C gelöst. Die derart hergestellte Phosgen-Lösung wurde in Kontakt gebracht mit 907 g/h einer auf 30°C temperierten 15 Gew.-%igen wässrigen alkalischen Bisphenol A-Lösung. Dafür wurde die alkalische Bisphenol A-Lösung durch einen Edelstahlfilter mit der Porengröße 90 µm in der Phosgen-Lösung gepresst und dadurch in dieser dispergiert. In der Bisphenol A-Lösung wurden 2 mol NaOH auf 1 mol Bisphenol-A eingesetzt. Das Reaktionsgemisch wurde in einer auf 25°C temperierten Fink HMR040 Mischpumpe bis zur vollständigen Umsetzung des Phosgens abreagiert. Danach wurden 4,11 g/h eines Gemisches aus 50 mol-% p-tert.-Butylphenol und 50 mol-% tert.-Butyl-4-Hydroxybenzoat als Kettenabbrecher zudosiert, und zwar in Form einer 3 Gew.-%igen Lösung im Lösemittelgemisch aus 50 Gew.-% Methylenchlorid und 50 Gew.-% Chlorbenzol.

Das so erhaltene Reaktionsgemisch wurde in einer zweiten, auf 25°C temperierten Fink HMR040 Mischpumpe mit 66,52 g/h 32 Gew.-%iger wässriger Natronlauge weiterreagiert. Es folgten zwei überflutet gefahrene, mit Strömungsbrechern ausgestattete Rührkessel mit einer Verweilzeit von jeweils 600 s, jeweils gefolgt von einer Zahnradpumpe, die sowohl der Förderung des Reaktionsgemisches als auch der weiteren Dispergierung dienen. Nach der ersten Pumpe, d.h. vor dem zweiten Rührkessel, wurde als Katalysator 0,679 g/h einer 10 Gew.%-igen Lösung von N-Ethylpiperidin in Chlorbenzol zudosiert. Am Ende der Reaktion lag der pH-Wert bei etwa 11,5. In einem Phasentrenngefäß wurde die organische von der wässrigen Phase des zweiphasigen Reaktionsgemisches getrennt und die organische Phase mit einer 0,1 Gew.-%igen wässrigen HCl-Lösung zur Entfernung des Katalysators gewaschen.

Nachfolgend wurde weiterhin mit vollentsalztem Wasser zur Entfernung der Salzreste gewaschen. Die derart gewaschene Polymerlösung wurde in organischem Lösungsmittel gefällt und über Nacht im Vakuumofen bei 120 °C getrocknet.

### Herstellung erfindungsgemäßer Polycarbonate durch Endgruppenpyrolyse der Polycarbonat-Vorstufe PC-1

Die Freisetzung der COOH-Endgruppen durch thermische Endgruppenpyrolyse der gemäß dem zuvor beschriebenen Verfahren hergestellten Polcarbonat-Vorstufe PC-1 unter Abspaltung der Schutzgruppe in Form von Isobutylen-Gas erfolgte in einem kontinuierlichen Doppelwellen-Extruder vom Typ Process 11 (Thermofischer Scientific, Karlsruhe, Deutschland) mit einer Schneckenkonfiguration mit drei Mischzonen und mit einem Verhältnis an Länge zu Durchmesser (L/D) von 40. Die verschiedenen erfindungsgemäßen Polycarbonat-Beispiele und -Vergleichsbeispiele wurden bei unterschiedlichen Schmelzetemperaturen im Bereich von 227 bis 288°C, gemessen über einen düsenaustrittsnah im letzten Gehäuseelement des Extruders verbauten Thermofühler, hergestellt. Die Schmelzetemperatur resultierte dabei aus dem Eintrag mechanischer Energie durch die Knetelemente sowie dem Eintrag thermischer Energie durch die Beheizung des Extrudergehäuses. Das Extrudergehäuse ist in acht separat und unterschiedlich beheizbare Zonen eingeteilt. Die drei Knetzonen befanden sich im Übergang der Heizzonen 3 und 4, in der Heizzone 5 sowie im Übergang der Heizzonen 6 und 7., Der Rohstoffeinzug befand sich in der Heizzone 1. Darüber hinaus ist die Austrittsdüse separat beheizbar. Zur Einstellung der unterschiedlichen Schmelzetemperaturen, die über den düsenaustrittsnah im letzten Gehäuseelement des Extruders verbauten Thermofühler erfasst wurden, wurden die Gehäusetemperaturen in den Gehäusezonen sowie die Düsentemperatur auf unterschiedliche Temperaturen temperiert (siehe Tabelle 1). Das erste Gehäuse (Rohstoffeinzugszone) wurde in allen Fällen nicht beheizt, Zone 2 wurden in allen Fällen auf eine Soll-Temperatur von 70°C beheizt und Zonen 4 bis 8 wurden in allen Fällen mit jeweils derselben Soll-Temperatur gemäß Tabelle 1 beheizt. In allen Fällen kam als Einsatzrohstoff dieselbe Polcarbonat-Vorstufe (PC-1) zum Einsatz. Der Extruder wurde in allen Fällen mit einem Durchsatz von etwa 300 g/h und mit einer Drehzahl von 175 min⁻¹ betrieben. Durch Anlegen eines Unterdruckes von ca. 100 mbar (absolut) wurde das im Extruder unter diesen Verfahrensbedingungen freigesetzte Isobutylen-Gas kontinuierlich über einen Entgasungsdom in der vorletzten (siebten) Heizzone aus dem Extruder abgezogen. Unter diesen Verfahrensbedingungen ergab sich in allen Fällen eine Verweilzeit des Polycarbonat im Extruder von ca. 70 s. Die für die unterschiedlich hergestellten erfindungsgemäßen Polycarbonate und Vergleichs-Polycarbonate in den Extruderheizzonen verwendeten Gehäusetemperaturen und die am düsenaustrittsnah im letzten Gehäuseelement des Extruders verbauten Thermofühler gemessenen Schmelzetemperaturen sind Tabelle 1 zu entnehmen.

**Tabelle 1: Eingestellte Soll-Temperaturen in den verschiedenen Heizzonen des Gehäuses und an der Austrittsdüse des Doppelwellenextruders sowie in Düsenaustrittsnähe gemessene Schmelzetemperatur bei der Herstellung der erfindungsgemäßen Polycarbonate und Vergleichs-Polycarbonate**

| **Polycarbonat [°C]** | **Heizzone 3 [°C]** | **Heizzonen 4-8 [°C]** | **Düsentemperatur [°C]** | **Schmelzetemperatur [°C]** |
|---|---|---|---|---|
| PC-1* | Vorstufe | Vorstufe | Vorstufe | Vorstufe |
| PC-2* | 160 | 220 | 235 | 227 |
| PC-3 | 190 | 240 | 240 | 231 |
| PC-4 | 160 | 260 | 260 | 252 |
| PC-5* | 160 | 280 | 280 | 270 |
| PC-6* | 190 | 290 | 290 | 274 |
| PC-7* | 160 | 300 | 300 | 288 |

| | | | | |
|---|---|---|---|---|
| Mit * gekennzeichnete Polycarbonate sind nicht erfindungsgemäße Beispiele. | | | | |

### Strukturelle Charakterisierung der Polycarbonate

Das Molekulargewicht der Polycarbonate wurden mittels Gelpermeationschromatographie (GPC) in Methylenchlorid bei Raumtemperatur mit BPA-Polycarbonat als Kalibrationsstandard bestimmt. Es wurde ein FTIR-Detektor bei einer für BPA-Polycarbonat selektiven Wellenlänge von 1775 cm⁻¹ verwendet.

Die Analyse der Polycarbonate im Hinblick auf den Gehalt an strukturellen Einheiten gemäß Komponenten A, B1, B2-a, B2-b und C erfolgte mittels 1H NMR-Spektroskopie in deuteriertem Chloroform als Lösungsmittel bei Raumtemperatur (siehe Tabelle 2).

Die integrierte Signalintensität der jeweiligen NMR-Signale dividiert durch die Anzahl der das Signal verursachenden Protonen ist proportional zum molaren Gehalt der jeweiligen Struktureinheit. Aus den entsprechenden Verhältnissen der derart normierten Signalintensitäten wurden somit die molaren Verhältnisse der entsprechenden Struktureinheiten gemäß der verschiedenen Merkmale für die erfindungsgemäßen Polycarbonate ermittelt.

Die Säurezahl der Polycarbonate wurde bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur. Das zu untersuchende Polycarbonat wurde dazu in einer Konzentration von 10 g/L in 50 ml Dichlormethan bei Raumtemperatur gelöst. Vor der potentiometrischen Titration mit 0,1 N ethanolischer KOH wurden der Probenlösung 5 ml Ethanol zugegeben.

In Tabelle 2 sind die derart ermittelten strukturellen Merkmale der hergestellten Polycarbonate zusammengefasst.

**Tabelle 2: Ergebnisse der strukturellen Charakterisierung der hergestellten Polycarbonate**

| **Merkmal** | **PC-1*** | **PC-2*** | **PC-3** | **PC-4** | **PC-5*** | **PC-6*** | **PC-7*** |
|---|---|---|---|---|---|---|---|
| M_{w} [kg/mol] | 27,0 | n.g. | 23,6 | 24,8 | n.g | n.g. | n.g |
| Mₙ [kg/mol] | 15,8 | n.g. | 12,2 | 12,7 | n.g | n.g. | n.g |
| Säurezahl [mg KOH/g] | <0,1 | 1,5 | 3,0 | 2,3 | 1,3 | <0,1 | <0,1 |
| Signalintensität (8,14 ppm) = A | 0 | 1,52 | 1,87 | 2,25 | 1,24 | 0 | 0 |
| Signalintensität (8,05 ppm) = B1 | 2,84 | 1,28 | 0,54 | 0,04 | 0,06 | 0 | 0,09 |
| Signalintensität (8,26 ppm) = B2-a | 0 | 0,05 | 0,26 | 0,25 | 0,92 | 2,68 | 2,26 |
| Signalintensität (8,22 ppm) = B2-b | 0 | 0,03 | 0,14 | 0,20 | 0,39 | 0 | 0 |
| Signalintensität (1,32 ppm) = C | 14,89 | 15,77 | 15,08 | 15,63 | 15,50 | 14,42 | 14,75 |
| A/B | 0 | 1,1 | 2,0 | 4,7 | 0,9 | 0 | 0 |
| B2/(A+B2) | - | 0,05 | 0,18 | 0,16 | 0,51 | 1 | 1 |
| A/(A+B1) | 0 | 0,54 | 0,78 | 0,98 | 0,95 | - | 0 |
| C/(A+B+C) | 0,54 | 0,55 | 0,54 | 0,56 | 0,57 | 0,54 | 0,58 |

| | | | | | | | |
|---|---|---|---|---|---|---|---|
| Mit * gekennzeichnete Polycarbonate sind nicht erfindungsgemäße Beispiele. n.g. = nicht gemessen | | | | | | | |

Die Daten in Tabelle 2 zeigen im Zusammenschau mit den Verfahrensparametern in Tabelle 1, dass die Struktur der hergestellten Polycarbonate in überraschender Weise stark von den thermischen Bedingungen (konkret der Schmelzetemperatur) im Endgruppenpyrolysenschritt (ii) abhängen. Polycarbonate mit einem hohen Verhältnis von A/B resultieren in einem relativ engen Schmelzetemperaturbereich ((PC-3) und (PC-4)), während bei niedrigeren Schmelzetemperaturen von beispielsweise 227°C (PC-2*) als auch höheren Schmelzetemperaturen von 270°C (PC-5*), 274°C (PC-6*) und 288°C (PC-7*) ebenso wie bei dem Produkt, welches direkt im Verfahrensschritt (i), das heißt ohne Endgruppenpyrolyse-Verfahrensschritt (ii) erhalten wird (PC-1*) deutlich niedrigere A/B-Verhältnisse resultieren. PC-4 zeigt gegenüber PC-3 ein weiter verbessertes A/B-Verhältnis. Auch zeigt PC-4 gegenüber PC-3 ein weiter verbesserte Verhältnis A/(A+B1) - als Maß für den Grad der angestrebten Eliminierung von Isobutylen aus der tert.-Butyl-Esterschutzgruppe unter Freisetzung endständiger COOH-Gruppen. Das Verhältnis B2/(A+B2) - als Maß für den Umsetzungsgrad intermediär gebildeter COOH-Endgruppen in unerwünschten Umesterungsfolgereaktionen - ist dabei bei PC-3 und PC-4 annähernd gleich.

### Herstellung von Formmassen aus den erfindungsgemäßen Polycarbonaten

Aus den erfindungsgemäßen Polycarbonaten und Vergleichs-Polycarbonaten wurden über ein Reaktivextrusionsverfahren PC/PMMA-Formmassen hergestellt. Hierfür wurden die Polycarbonate zunächst zu Pulver vermahlen und mit einem ebenfalls zu einem Pulver vermahlenen Methylmethacrylat-Glycidylmethacrylat-Copolymer (PMMA-GMA) im Verhältnis 80 Gew.-% des jeweiligen Polycarbonats zu 20 Gew.-% des PMMA-GMA zu einer homogenen Pulvermischung vorgemischt. Bei dem PMMA-GMA handelte es sich um ein statistisches Methylmethacrylat-Glycidylmethacrylat-Copolymerisat mit einem Gehalt an von Glycidylmethacrylat abgeleiteten Struktureinheiten von 1,0 Gew.-%, hergestellt durch radikalische Polymerisation, welches ein gewichtsgemitteltes Molekulargewicht M_{w} von 60.000 g/mol, gemessen mittels Gelpermeationschromatographie bei Raumtemperatur in Tetrahydrofuran als Lösungsmittel gegen einen Polystyrol-Kalibrierungsstandard, aufwies. Das Epoxid-Äquivalent dieses PMMA-GMA-Copolymers wurde gemäß DIN EN 1877-1 (Version 12-2000) in Dichlormethan bei Raumtemperatur zu 0,32 Gew.-% bestimmt.

Zur gezielten Einstellung verschiedener A/B-Verhältnisse wurden zusätzlich auch Mischungen eines erfindungsgemäßen Polycarbonats (PC-8) und eines nicht erfindungsgemäßen Polycarbonats (PC-6*) mit unterschiedlichen Mischungsverhältnissen dieser beiden Polycarbonate als PolycarbonatKomponente zur Herstellung von Vergleichs-PC/PMMA-Formmassen PC/PMMA-4* bis PC/PMMA-6* eingesetzt.

Polycarbonat PC-8 wurde ebenfalls aus der Vorstufe PC-1 durch thermische Endgruppenpyrolyse gewonnen. PC-8 weist eine Säurezahl, bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur, von 2,4 mg KOH/g auf. Mittels ¹H NMR-Spektroskopie wurde das Verhältnis A/B zu 1,8, das Verhältnis B2/(A+B2) zu 0,28, das Verhältnis B1/(A+B1) zu 0,85 und das Verhältnis C/(A+B+C) zu 0,55 ermittelt.

Die thermoplastischen PC/PMMA-Formmassen aus den in Tabelle 3 dargestellten Zusammensetzungen wurden auf einem kontinuierlichen Doppelwellen-Extruder vom Typ Process 11 (Thermofischer Scientific, Karlsruhe, Deutschland) mit einer Schneckenkonfiguration mit zwei Mischzonen bei einer Schmelzetemperatur von 260°C, einem Durchsatz von etwa 300 g/h, einer Drehzahl von 125 min⁻¹ und bei einem Absolutdruck von 100 mbar compoundiert. Unter diesen Bedingungen ergab sich eine Verweilzeit von ca. 90 s. Nach Austritt durch eine Düsenplatte wurde der Schmelzestrang abgekühlt, dadurch verfestigt und anschließend granuliert. Für die Compoundierungen wurden die Pulvermischungen aus der PC- und der PMMA-Komponente über einen volumetrischen Dosierer in die Einlaufzone des Doppelwellenextruders dosiert.

### Herstellung von Formkörpern aus den Formmassen enthaltend erfindungsgemäße Polycarbonate und deren technische Bewertung

Aus den thermoplastischen PC/PMMA-Formmassen, welche aus den Zusammensetzungen gemäß Tabelle 3 hergestellt wurden, wurden mittels einer Laborthermopresse vom Typ Polystat 200 der Firma Servitec Maschinenservice GmbH (Wustermark, Deutschland) bei einer Temperatur von 260°C, einem Druck von 100 bar und einer Pressdauer von insgesamt 4 min Rundplatten mit einem Durchmesser von 25 mm und einer Dicke von 1 mm hergestellt.

Die Transparenz der so hergestellten Formkörper und deren Homogenität wurde zunächst visuell beurteilt. Weiterhin wurden die entsprechenden wellenlängenabhängigen totalen Transmissionsgrade nach DIN 5033-7 (2014) bestimmt und daraus nach DIN EN ISO 11664-3 (2013) mit der Lichtart D65 und dem 10°-Beobachter der Transmissions-Wert Y(D65, 10°) berechnet.

Die Duktilität der Formmassen wurde ebenfalls an diesen thermogepressten Rundplatten mit einem Durchmesser von 25 mm und einer Dicke von 1 mm bei Raumtemperatur in einem Aufprallversuch beurteilt. Die Messungen erfolgten mit einem Eigenbau-Fallwerk (Fallmasse 1,86 kg, Auflager-Durchmesser 15 mm, Dorndurchmesser (halbkugelförmig) 7 mm). Dabei wurde die Fallhöhe der Fallmasse systematisch variiert und beurteilt, bis zu welcher Fallhöhe der Prüfkörper nicht durchstoßen wird bzw. keine Schädigung zeigt sowie bis zu welcher Fallhöhe der Prüfkörper ein zähes Bruchbild mit stabiler Rissausbreitung zeigt.

Die Daten in Tabelle 3 zeigen, dass nur mit dem erfindungsgemäßen Polycarbonat PC-3 eine PC/PMMA-Formmasse hergestellt werden konnte, die zu einem homogen transparenten Formkörper mit hoher Transmission verarbeitet werden konnte. Diese Formmasse weist auch eine gute Duktilität bei Raumtemperatur auf. Mit dem nicht erfindungsgemäßen Vergleichspolycarbonat PC-6*, das bei einer höheren Schmelzetemperatur endgruppenpyrolysiert wurde, wurde kein transparenter Formkörper realisiert. Mit dem nicht erfindungsgemäßen Vergleichspolycarbonat PC-1* aus dem Verfahrensschritt (i) konnte ebenfalls kein homogen transparenter Formkörper realisiert werden. Die mit diesem Polcarbonat hergestellten PC/PMMA-Formmassen führten zu milchig schlierigen Formkörpern. Auch mit den zur gezielten Variation des A/B-Verhältnisses im Bereich bis zu 0,9 mit Polycarbonat-Mischungen hergestellten Formmassen PC/PMMA-4* bis PC/PMMA-6* lassen sich keine transparenten Formkörper mit hoher Lichttransmission (d.h. Durchleuchtungsstärke) erzielen.

**Tabelle 3: PC/PMMA-Formmassen**

| **Zusammensetzung** | **PC/ PMMA-1*** | **PC/ PMMA-2** | **PC/ PMMA-3*** | **PC/ PMMA-4*** | **PC/ PMMA-5*** | **PC/ PMMA-6*** |
|---|---|---|---|---|---|---|
| PC-1* | 80 | | | | | |
| PC-3 | | 80 | | | | |
| PC-6* | | | 80 | 20 | 40 | 60 |
| PC-8 | | | | 60 | 40 | 20 |
| PMMA-GMA | 20 | 20 | 20 | 20 | 20 | 20 |

| **Merkmal der PC-Rohstoffmischung** | | | | | | |
|---|---|---|---|---|---|---|
| Säurezahl [mg KOH/g] | | | | 1,8 | 1,2 | 0,6 |
| A/B | | | | 0,9 | 0,5 | 0,2 |
| B2/(A+B2) | | | | 0,47 | 0,66 | 0,83 |
| B1/(A+B1) | | | | 0,85 | 0,85 | 0,85 |
| C/(A+B+C) | | | | 0,55 | 0,55 | 0,55 |

| **Eigenschaften** | | | | | | |
|---|---|---|---|---|---|---|
| Visuelle Beurteilung | Inhomogen milchig, schlierig | Homogen transparent | Homogen opak | Homogen, trüb | Homogen, milchig trüb | Homogen opak |
| Transmission Y(D65, 10°) [%] | | 83 | | | | |
| Duktilität: keine Schädigung bis zu einer Fallhöhe von [cm] | | 20 | | | | |
| Duktilität: zähes Bruchbild mit stabiler Rissausbreitung bis zu einer Fallhöhe von [cm] | | 40 | | | | |

| | | | | | | |
|---|---|---|---|---|---|---|
| Mit * gekennzeichnete Polycarbonate sind nicht erfindungsgemäße Beispiele. | | | | | | |

## Patentansprüche

1. Aromatisches Polycarbonat enthaltend
A) von einer Hydroxybenzoesäure abgeleitete, als Endgruppen vorliegende Struktureinheiten mit freier COOH-Funktionalität und
B) von einer Hydroxybenzoesäure abgeleitete Struktureinheiten,
wobei Komponente B) ausgewählt ist aus mindestens einem Vertreter aus
B1) von einer Hydroxybenzoesäure abgeleiteten, als Endgruppen vorliegenden Struktureinheiten mit veresterter COOH-Funktionalität,
und
B2) von einer Hydroxybenzoesäure abgeleiteten Struktureinheiten, welche über eine Ester- oder Säureanhydrid-Gruppe in der Polymer-Kette eingebaut vorliegen,
wobei das molare Verhältnis der Menge von Komponente A zur Menge von Komponente B im Bereich 1,3 bis 50 liegt.

2. Aromatische Polycarbonat gemäß Anspruch 1, wobei das Polycarbonat **gekennzeichnet ist durch** eine Säurezahl im Bereich von 0,5 bis 10 mg Kaliumhydroxid (KOH)/g, bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur.

3. Aromatisches Polycarbonat gemäß Anspruch 1 oder 2, **dadurch gekennzeichnet, dass** das molare Verhältnis der Menge von Komponente B2 zur Summe der Mengen von Komponenten A und B2 bei <0,3 liegt.

4. Aromatisches Polycarbonat gemäß einem der vorhergehenden Ansprüche, **dadurch gekennzeichnet, dass** darin das molare Verhältnis der Menge von Komponenten A zur Summe der Mengen von Komponenten A und B1 bei >0,75 liegt.

5. Aromatisches Polycarbonat gemäß einem der vorhergehenden Ansprüche, weiterhin enthaltend als Komponente C von Monophenolen, welche keine Carboxy- oder Carboxyderivat-Funktionalitäten enthalten, abgeleitete Struktureinheiten, wobei Komponente C in dem Polycarbonat in einem molaren Anteil, bezogen auf in Summe 100 mol-% der molaren Anteile der Komponenten A, B1, B2 und C, von 20 bis 90 mol-% vorliegt.

6. Verfahren zur Herstellung eines aromatischen Polycarbonats, welches die folgenden Schritte umfasst:
(i) Herstellung eines aromatischen Polycarbonats, enthaltend von einem Hydroxybenzoesäureester abgeleitete Endgruppen, durch Phosgenierung im Phasengrenzflächenverfahren oder in organischer Lösung von aromatischen Diolen in Anwesenheit eines Esters einer Hydroxybenzoesäure oder einer Mischung mehrerer Ester einer oder mehrerer, strukturell unterschiedlicher Hydroxybenzoesäuren
als Kettenabbrecher,
wobei bei der Herstellung gemäß Verfahrensschritt (i) zu keinem Zeitpunkt eine Temperatur von 260°C überschritten wird,
und
(ii) thermische Endgruppenpyrolyse der von Hydroxybenzoesäureestern abgeleiteten Endgruppen im Produkt aus Verfahrensschritt (i) unter Eliminierung eines Alkens
wobei das Produkt aus Verfahrensschritt (i) im Verfahrensschritt (ii) unter Zuführung thermischer oder mechanischer Energie im Temperaturbereich 230 bis 265°C pyrolysiert und das dabei entstehende Alken aus dem Aggregat entfernt wird und
wobei die Verweilzeit bei der Temperatur im Bereich 230 bis 265°C minimal 15 s und maximal 10 Minuten beträgt.

7. Verfahren gemäß Anspruch 6, wobei in Verfahrensschritt (i) ein Ester aus einer Hydroxybenzoesäure und einem Alkohol der allgemeinen Struktur(1) eingesetzt wird 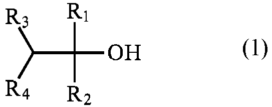 wobei R₁, R₂, R₃ und R₄ unabhängig voneinander für Wasserstoff oder einen Alkyl-, Aryl- oder Alkylaryl-Rest mit 1 bis 10 C-Atomen stehen.

8. Verfahren gemäß einem der Ansprüche 6 oder 7, wobei das Produkt aus Verfahrensschritt (i) im Verfahrensschritt (ii) in einem Compoundierungsaggregat ausgewählt aus der Gruppe umfassend Einwellenextruder, gleichläufige oder gegenläufige Doppelwellenextruder, Planetwalzenextruder, kontinuierlichen oder diskontinuierliche Innenkneter und Filmtruder unter Zuführung thermischer oder mechanischer Energie aufgeschmolzen und bei einer Schmelzetemperatur im Bereich 230 bis 260°C pyrolysiert wird und wobei die Verweilzeit der Schmelze in diesem Temperaturbereich minimal 30 s und maximal 2 Minuten beträgt.

9. Verfahren gemäß einem der Ansprüche 6 bis 8 zur Herstellung eines aromatischen Polycarbonats gemäß einem der Ansprüche 1 bis 5.

10. Copolymer enthaltend Struktureinheiten abgeleitet von einem aromatisches Polycarbonat gemäß einem der Ansprüche 1 bis 5.

11. Thermoplastische Formmasse enthaltend ein Copolymer gemäß Anspruch 10 oder ein Polycarbonat gemäß einer der Ansprüche 1 bis 5.

12. Verwendung eines aromatischen Polycarbonats gemäß einer der Ansprüche 1 bis 5 oder 10 zur Herstellung eines Copolymers enthaltend mindestens einen Polycarbonat-Block und mindestens einen Vinylpolymer- oder Polyolefin-Block.

13. Verfahren zur Herstellung eines Copolymers enthaltend mindestens einen Polycarbonat-Block umfassend die Schritte
a) Aufschmelzen einer Zusammensetzung enthaltend
I) ein aromatisches Polycarbonat gemäß einer der Ansprüche 1 bis 5 und
II) ein weiteres Polymer enthaltend mindestens eine Art funktioneller Gruppen ausgewählt aus Ester-, Hydroxy-, Carboxy-, Carbonsäureanhydrid- und Epoxygruppen
durch Einbringen thermischer Energie und/oder mechanischer Scherung,
b) Vermischen und Dispergieren der verschiedenen Komponenten der Zusammensetzung mit- bzw. ineinander,
c) Verfestigen der Schmelze durch Abkühlen,
d) Granulieren des verfestigten aus den Schritten (a) bis (c) resultierenden Polymerblends,
wobei der Schritt (b) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und bei einer Temperatur der Schmelze von 230 bis 300°C erfolgt.

14. Verfahren gemäß Anspruch 13, wobei es sich bei der Komponente II) um ein von Glycidylmethacrylat abgeleitete Struktureinheiten enthaltendes Vinylpolymer oder Polyolefin handelt.

15. Formkörper enthaltend ein Copolymer erhältlich in einem Verfahren gemäß Anspruch 13 oder 14 oder enthaltend eine Formmasse gemäß Anspruch 11.

## Claims

1. Aromatic polycarbonate containing
A) structural units having a free COOH functionality derived from a hydroxybenzoic acid and present as end groups and
B) structural units derived from a hydroxybenzoic acid,
wherein component B) is selected from at least one representative of
B1) structural units having an esterified COOH functionality derived from a hydroxybenzoic acid and present as end groups
and
B2) structural units derived from a hydroxybenzoic acid which are incorporated in the polymer chain via an ester group or acid anhydride group,
wherein the molar ratio of the amount of component A to the amount of component B is in the range 1.3 to 50.

2. Aromatic polycarbonate according to Claim 1, wherein the polycarbonate is **characterized by** an acid number in the range from 0.5 to 10 mg potassium hydroxide (KOH)/g, determined in dichloromethane (DCM)/ethanol as solvent according to DIN EN ISO 2114, method A, 2002-6 version, by potentiometric titration with ethanolic KOH solution at room temperature.

3. Aromatic polycarbonate according to Claim 1 or 2, **characterized in that** the molar ratio of the amount of component B2 to the sum of the amounts of components A and B2 is <0.3.

4. Aromatic polycarbonate according to any of the preceding claims, **characterized in that** therein the molar ratio of the amount of components A to the sum of the amounts of components A and B1 is >0.75.

5. Aromatic polycarbonate according to any of the preceding claims, further containing as component C structural units derived from monophenols containing no carboxy or carboxy derivative functionalities, wherein component C is present in the polycarbonate in a molar proportion, based on a total of 100 mol% of the molar proportions of components A, B1, B2 and C, of 20 to 90 mol%.

6. Process for producing an aromatic polycarbonate comprising the steps of:
(i) producing an aromatic polycarbonate containing end groups derived from a hydroxybenzoic ester by phosgenation in the phase interface process or in organic solution of aromatic diols in the presence of an ester of a hydroxybenzoic acid or a mixture of two or more esters of one or more structurally distinct hydroxybenzoic acids
as chain terminator,
wherein a temperature of 260°C is at no point exceeded in the producing according to process step (i),
and
(ii) thermal end group pyrolysis of the hydroxybenzoic ester-derived end groups in the product from process step (i) to eliminate an alkene
wherein in process step (ii) the product from process step (i) is pyrolysed in the temperature range 230°C to 265°C by supplying thermal or mechanical energy and the resulting alkene is removed from the apparatus and
wherein the residence time at the temperature in the range 230°C to 265°C is not less than 15 seconds and not more than 10 minutes.

7. Process according to Claim 6, wherein process step (i) employs an ester of a hydroxybenzoic acid and an alcohol of general structure (1) 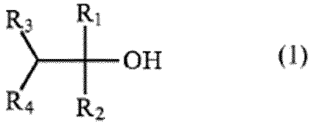 wherein R₁, R₂, R₃ and R₄ independently of one another represent hydrogen or an alkyl, aryl or alkylaryl radical having 1 to 10 carbon atoms.

8. Process according to either of Claims 6 or 7, wherein in process step (ii) the product from process step (i) is melted in a compounding apparatus selected from the group comprising single-screw extruders, co-rotating or counter-rotating twin-screw extruders, planetary roller extruders, continuous or discontinuous internal kneaders and filmtruders by supplying thermal or mechanical energy and pyrolysed at a melt temperature in the range 230°C to 260°C and wherein the residence time of the melt in this temperature range is not less than 30 seconds and not more than 2 minutes.

9. Process according to any of Claims 6 to 8 for producing an aromatic polycarbonate according to any of Claims 1 to 5.

10. Copolymer containing structural units derived from an aromatic polycarbonate according to any of Claims 1 to 5.

11. Thermoplastic moulding compound containing a copolymer according to Claim 10 or a polycarbonate according to any of Claims 1 to 5.

12. Use of an aromatic polycarbonate according to any of Claims 1 to 5 or 10 for producing a copolymer containing at least one polycarbonate block and at least one vinyl polymer or polyolefin block.

13. Process for producing a copolymer containing at least one polycarbonate block comprising the steps of
a) melting a composition containing
I) an aromatic polycarbonate according to any of Claims 1 to 5 and
II) a further polymer containing at least one type of functional group selected from ester, hydroxy, carboxy, carboxylic anhydride and epoxy groups through introduction of thermal energy and/or mechanical shear,
b) mixing and dispersing the different components of the composition with/into one another,
c) solidifying the melt by cooling,
d) pelletizing the solidified polymer blend resulting from steps (a) to (c),
wherein step (b) is carried out in a compounding machine selected from the group consisting of single-screw extruders, co-rotating or counter-rotating twin-screw extruders, planetary roller extruders, internal kneaders or co-kneaders and at a temperature of the melt of 230°C to 300°C.

14. Process according to Claim 13, wherein component II) is a vinyl polymer or polyolefin containing structural units derived from glycidyl methacrylate.

15. Shaped article containing a copolymer obtainable in a process according to Claim 13 or 14 or containing a moulding compound according to Claim 11.

## Revendications

1. Polycarbonate aromatique, contenant
A) des unités structurelles dérivées d'un acide hydroxybenzoïque, présentes en tant que groupes terminaux, ayant une fonctionnalité COOH libre, et
B) des unités structurelles dérivées d'un acide hydroxybenzoïque,
le composant B) étant choisi parmi au moins un élément parmi
B1) des unités structurelles dérivées d'un acide hydroxybenzoïque, présentes en tant que groupes terminaux, avec une fonctionnalité COOH estérifiée,
et
B2) des unités structurelles dérivées d'un acide hydroxybenzoïque, qui sont présentes incorporées dans la chaîne polymère par l'intermédiaire d'un groupe ester ou anhydride d'acide,
le rapport molaire de la quantité de composant A à la quantité de composant B étant dans la plage de 1,3 à 50.

2. Polycarbonate aromatique selon la revendication 1, le polycarbonate étant **caractérisé par** un indice d'acide dans la plage de 0,5 à 10 mg d'hydroxyde de potassium (KOH)/g, déterminé dans du dichlorométhane (DCM)/éthanol en tant que solvant selon la norme DIN EN ISO 2114, méthode A dans la version 2002-6, par titrage potentiométrique avec une solution éthanolique de KOH à température ambiante.

3. Polycarbonate aromatique selon la revendication 1 ou 2, **caractérisé en ce que** le rapport molaire de la quantité de composant B2 à la somme des quantités de composants A et B2 est < 0,3.

4. Polycarbonate aromatique selon l'une quelconque des revendications précédentes, **caractérisé en ce que** le rapport molaire de la quantité de composants A à la somme des quantités de composants A et B1 est > 0,75.

5. Polycarbonate aromatique selon l'une quelconque des revendications précédentes, contenant en outre en tant que composant C des unités structurelles dérivées de monophénols qui ne contiennent pas de fonctionnalités carboxy ou dérivé de carboxy, le composant C étant présent dans le polycarbonate en une proportion molaire, par rapport à la somme de 100 % en moles des proportions molaires des composants A, B1, B2 et C, de 20 à 90 % en moles.

6. Procédé de préparation d'un polycarbonate aromatique, qui comprend les étapes suivantes :
(i) la préparation d'un polycarbonate aromatique contenant des groupes terminaux dérivés d'un ester d'acide hydroxybenzoïque par phosgénation par le procédé à l'interface de phases ou en solution organique de diols aromatiques en présence d'un ester d'un acide hydroxybenzoïque ou d'un mélange de plusieurs esters d'un ou plusieurs acides hydroxybenzoïques structurellement différents
en tant qu'agent de rupture de chaînes,
une température de 260 °C n'étant dépassée à aucun moment lors de la préparation selon l'étape de procédé (i),
et
(ii) la pyrolyse thermique des groupes terminaux dérivés d'esters d'acide hydroxybenzoïque dans le produit de l'étape de procédé (i) avec élimination d'un alcène,
le produit de l'étape de procédé (i) étant pyrolysé dans l'étape de procédé (ii) avec apport d'énergie thermique ou mécanique dans la plage de températures de 230 à 265 °C et l'alcène ainsi formé étant éliminé de l'unité et
le temps de séjour à la température dans la plage de 230 à 265 °C étant au minimum de 15 secondes et au maximum de 10 minutes.

7. Procédé selon la revendication 6, dans lequel, dans l'étape de procédé (i), on utilise un ester d'un acide hydroxybenzoïque et d'un alcool de structure générale (1) 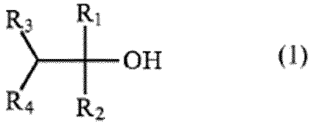 dans laquelle R₁, R₂, R₃ et R₄ représentent, indépendamment les uns des autres, un atome d'hydrogène ou un radical alkyle, aryle ou alkylaryle comportant de 1 à 10 atomes C.

8. Procédé selon l'une quelconque des revendications 6 ou 7, dans lequel le produit de l'étape de procédé (i) est fondu dans l'étape de procédé (ii) dans une unité de malaxage choisie dans le groupe comprenant des extrudeuses à arbre unique, des extrudeuses à double arbre tournant dans le même sens ou en sens inverse, des extrudeuses à cylindre planétaire, des malaxeurs internes continus ou discontinus et des extrudeuses à film, avec apport d'énergie thermique ou mécanique, et pyrolysé à une température de masse fondue dans la plage de 230 à 260 °C, et dans lequel le temps de séjour de la masse fondue dans cette plage de température est de 30 s au minimum et de 2 minutes au maximum.

9. Procédé selon l'une quelconque des revendications 6 à 8 pour la préparation d'un polycarbonate aromatique selon l'une quelconque des revendications 1 à 5.

10. Copolymère contenant des unités structurelles dérivées d'un polycarbonate aromatique selon l'une quelconque des revendications 1 à 5.

11. Masse de moulage thermoplastique contenant un copolymère selon la revendication 10 ou un polycarbonate selon l'une quelconque des revendications 1 à 5.

12. Utilisation d'un polycarbonate aromatique selon l'une quelconque des revendications 1 à 5 ou 10 pour la préparation d'un copolymère contenant au moins une séquence polycarbonate et au moins une séquence polymère vinylique ou polyoléfine.

13. Procédé de préparation d'un copolymère contenant au moins une séquence polycarbonate, comprenant les étapes suivantes
a) la fusion d'une composition contenant
I) un polycarbonate aromatique selon l'une quelconque des revendications 1 à 5, et
II) un autre polymère contenant au moins un type de groupe fonctionnel choisi parmi les groupes ester, hydroxy, carboxy, anhydride d'acide carboxylique et époxy par apport d'énergie thermique et/ou de cisaillement mécanique,
b) le mélange et la dispersion des différents composants de la composition les uns avec les autres ou les uns dans les autres,
c) la solidification de la masse fondue par refroidissement,
d) la granulation du mélange de polymères solidifié résultant des étapes (a) à (c),
dans lequel l'étape (b) est réalisée dans une machine de malaxage choisie dans le groupe constitué par des extrudeuses à arbre unique, des extrudeuses à double arbre tournant dans le même sens ou en sens inverse, des extrudeuses à cylindres planétaires, des malaxeurs internes ou des co-malaxeurs et à une température de la masse fondue de 230 à 300 °C.

14. Procédé selon la revendication 13, dans lequel le composant II) est un polymère vinylique ou une polyoléfine contenant des unités structurelles dérivées de méthacrylate de glycidyle.

15. Corps moulé contenant un copolymère pouvant être obtenu par un procédé selon la revendication 13 ou 14 ou contenant une masse de moulage selon la revendication 11.
